# EUROPEAN PATENT SPECIFICATION

(11) **EP 2 857 921 B1**
(45) Date of publication and mention of the grant of the patent: **26.06.2019**
(21) Application number: 14187386.9
(22) Date of filing: 01.10.2014
(51) Int. Cl.: F24F 11/30, F24F 110/10, F24F 120/10, G05D 23/19

(54) **Intelligent temperature control system**
Intelligentes Temperatursteuerungssystem
Système de commande de température intelligent

(30) Priority: 01.10.2013 GB 201317409
(43) Date of publication of application: 08.04.2015
(73) Proprietor: Genius Concepts Ltd, Brierley Hill, West Midlands DY5 4TG (GB)
(72) Inventor: Woodbridge, Alasdair James, Brierley Hill, West Midlands DY5 4TG (GB); Turner, Simon Mark, Brierley Hill, West Midlands DY5 4TG (GB)
(74) Representative: Barker Brettell LLP

(56) References cited:
- WO-A1-2012/092627
- US-A1- 2011 062 246
- US-B1- 8 086 352

## Description

This invention relates to a system for controlling the heating or cooling of a building.

### Prior Art

It is known to have temperature control systems particularly domestic heating systems that are arranged to control the temperature in rooms in a building independently. In a typical domestic heating system a boiler may be provided that heats water to be circulated through a heating system comprising pipes connected to one or more radiators in a room. Originally such systems were controlled by a thermostat which might be centrally located. Depending on the location of the thermostat some rooms might be too hot or too cold. For many years it has been known to add a thermostatically controlled valve to one or more radiators so that the temperature in a particular room can be controlled. Typically the thermostat can be turned up when a room is occupied and can be turned down when the room is no longer occupied. Energy saving is however dependent on the occupant remembering to turn the thermostat down or alternatively if the occupant does not remember to turn the thermostat up the room may be unpleasantly cool. In addition it has been noted in the past that it can take some time for a room to warm up after the thermostat has been adjusted so usually thermostats are left on unless it is known that the room will not be used for a prolonged period of time such as a spare room which may not be used for a period of time.. Equally it is also known to control a temperature in a room by means of fans and/or air conditioners.

Usually systems as described have a timer that controls when the boiler and heating of the building as a whole. In simple heating systems the boiler is operative if a centrally located thermostat is at a temperature lower than a pre-determined temperature. In such systems there are no valves on the radiator. In some older heating systems a radiator valve may be arranged to be open or closed depending on a preset value of the radiator thermostat. A boiler in such a system will be operative if any radiator valves are open. If all the radiator valves are closed water in the boiler reaches a temperature above a preset value at the boiler and the boiler will then turn off. In more modern systems a radiator controller can be arranged to report a room temperature to a central controller and if the temperature in the room is below a set temperature the central controller is arranged to 'call' on the boiler to be operative if a timer setting in the controller allows for the boiler to operative at that time.. In response to a call for heat from a thermostat if the controller is in an on condition then the controller will operate the boiler and supply hot water to all the radiators until a signal from the thermostat indicates that the room with the thermostat has reached a preselected temperature. Alternatively it will be appreciated that a thermostat may be provided in a room and arranged to operate an air cooling device such as an air conditioner if the temperature of the room is higher than desired.

More modern systems have added functionality to the heating system. It has been realised that it may be desirable to be able to turn the heating system on or off from a distance and a number of systems allow the operation of the heating system to be controlled remotely through a computer or "app" interface. Such systems have been arranged to turn the whole heating system on or off. An advantage of such remote controlled systems is to allow a heating system to be turned on early if an occupant is unexpectedly returning to the building early and equally to allow a heating system to be turned off remotely.

It is also known to divide heating systems into zones and to control a temperature in each zone independently and indeed modern standards require that replacement and new heating systems in the UK have at least two heating zones. Typically each zone comprises a room with a radiator. Each zone is generally controlled by a central controller. A schedule for heating times for each zone is programmed manually into the central controller. It is known that some of these systems are arranged such that the system can be controlled remotely. This may be means of a program running on a computer or an "app" that can be operated from a smartphone or tablet or other similar device.

US 20110062246 describes a conversion system for converting a single zone system into a multi-zone system by the addition of thermostatic controls to each room a switching valve and a bypass such that heated water is switched to flow through the bypass if the thermostat indicates that further heat is not required in an individual room.

US2012/072079 discloses a method for operating a heating system comprising a heat source and at least a room heat ex-changer which is connected to the heats source and controlled thermostatically by a control valve, the heat source outputting a heating fluid having a supply temperature and the supply temperature being controlled according to a heat curve. The heat curve shows a relation between the supply temperature and an outdoor temperature.

### Object of the Invention

It is an object of the invention to provide a temperature control system that is flexible and economical. It is also an object to be able to remotely control the system which is arranged to learn the expected occupancy of a room and to prepare the room to be at a desired temperature when it is occupied.

According to a first aspect of the invention there is provided a heating or cooling control system for a building comprising having all of the features of claim 1.

The control system has a first controlled room wherein the first controlled room comprises:
a first heating or cooling source;
a first operating means for controlling operation of the heating or cooling source;
a first temperature detection means arranged to detect a temperature in the room and to output temperature information;
and a second controlled room comprising
a second heating or cooling source,
a second operating means arranged to control operation of the second heating or cooling source and
a second temperature detection means arranged to detect a temperature in the second controlled room
and the system comprises a controller arranged to receive data from the first and the second temperature detection means and to output signals controlling the first and second operating means wherein
the controller is arranged;
to allocate the first room in the building to a first primary zone and to be able to allocate the second controlled room in the building to a first secondary zone and wherein
the controller is arranged to control a temperature in the first secondary zone in response to operation of the heating or cooling source in the first primary zone.

In an embodiment of the invention there is provided a heating or cooling control system for a building comprising a number of controlled rooms wherein there is provided at least
a first controlled room comprising:
a first heating or cooling source;
a first operating means for controlling operation of the heating or cooling source;
a first temperature detection means arranged to detect a temperature in the first room and to output temperature information;
and at least one second controlled room comprising
a second heating or cooling source,
a second operating means arranged to control operation of the second heating or cooling source and
a second temperature detection means arranged to detect a temperature in the second controlled room; and
a third controlled room comprising:
a third heating or cooling source;
a third operating means for controlling operation of the third heating or cooling source;
a third temperature detection means arranged to detect a temperature in the third room and to output temperature information;
and wherein the system comprises a controller arranged to receive data from the first, second and third temperature detection means and to output signals controlling the first second, and third operating means wherein
the controller is arranged;
to be able to allocate the first room in the building to a first primary zone and to be able to allocate the second controlled room in the building to a first secondary zone and the controller is arranged to be able to allocate the third room in the building to a second primary zone and wherein
the controller is arranged to control a temperature in the first and second primary rooms in response to a respective temperature output from the first and third rooms
and to control a temperature in the first secondary zone in response to a temperature output of the second temperature detection means when the heating or cooling source in one of the first primary zone or the second primary zones is active.

Each primary zone comprises a respective heating or cooling source; operating means for controlling operation of the heating or cooling source and respective temperature detection means arranged to detect a temperature in the room and to output respective temperature data to the controller. When the heating or cooling source in the first or second primary zone is operating the source is heating or cooling the zone.

It will be appreciated that if the heating or cooling source is an electric radiator the operating means may be an electrical switch. When the electrical switch is on the heating or cooling source is operating.

The controller compares temperature output data from the or each zone to a desired temperature. If the detected temperature is not the desired temperature the controller outputs a signal to the operating means to continue heating or cooling the room.

In some embodiments a zone may comprise one room and in other embodiments a zone may comprise more than one room.

An advantage of the system is that the controller may be arranged to control heating in the primary zone in response to parameters. A zone is described as being active if a parameter is being monitored and the heating or cooling is being controlled in response to the parameter. Heating or cooling of the secondary zone is controlled by parameters controlling the heating or cooling of the secondary zone and the primary zone. In a domestic home a hallway may be a secondary zone. A living room may be a primary zone, and a bathroom may be a secondary zone. Heating or cooling of the or each secondary zone is controlled to be active only if the heating or cooling in at least one primary zone is active.

Preferably the system is arranged to control heating or cooling in the primary and secondary zones such that a temperature detected in the primary or secondary zone is at or approaches the desired temperature which may be referred to a as a set point temperature. The detected temperature may be a parameter. The controller may be arranged to be active and to operate the heating or cooling source such that the detected temperature in the zone reaches the set point temperature.

In a primary zone if the controller receives a detected temperature data that is not at a predetermined set temperature the controller outputs a signal to operate the heating or cooling source. If the zone has a heating source, it will be operated to heat the room if the detected temperature is below a set temperature. If the zone has a cooling source, it will be operated if the detected temperature is above the set temperature.

Desirably the system is arranged to comprise at least two primary zones. In a preferred embodiment the system may comprise a plurality of primary zones. Each primary zone comprises a respective heating or cooling source; operating means for controlling operation of the heating or cooling source and respective temperature detection means arranged to detect a temperature in the room and to output respective temperature data to the controller.

Preferably the system may comprise a number of secondary zones. The controller may be arranged to be able to allocate a number of rooms or zones to be secondary zones.

In some embodiments the heating or cooling source in each room is self contained. In some examples the heating source may comprise an electrically heated radiator and the operating means may be a control switch. The heating source may comprise underfloor heating. In other embodiments the system may comprise a centrally located heater, such as a boiler or cooler supplying a heating or cooling medium to a heating or cooling source in each room and the operating means may comprise a radiator valve. Typically such a system may comprise a boiler heating water which is conveyed to radiators located in each room. Each radiator may be regarded as a heating source in its respective room. Preferably the controller is arranged to control a boiler or other centrally located heater or cooler. In a preferred embodiment the controller is arranged to control operation of a boiler supplying heated water to a wet central heating system comprising a number of radiators and linking pipe work. A separate boiler control unit may be provided that is connected to the boiler and arranged to communicate with the controller, preferably wirelessly. The heating or cooling source may comprise part of a mechanical ventilation with heat recovery (MVHR) system. Alternative heating source comprise Infra Red (IR) panels, air source heat pumps (ASHP) or ground source heat pumps (GSHP), biomass boilers and electric radiators, electric storage heaters. The system may be used to control air conditioning units as the cooling source.

Preferably the controller is arranged to control the boiler and may be arranged to do so by sending instructions to the boiler control unit to operate the boiler or to stop the boiler from operating.

The controller is arranged to allocate a first room in the building to a first primary zone. If a primary zone is active the heating or cooling source may be controlled by the operating means such that a temperature in the primary zone reaches and maintains a set temperature. If the detected temperature in the primary zone is not at the set temperature the controller is arranged to control operating means controlling the heating or cooling source in the primary zone to be on or operating. If the system is a central heating system with a centrally located boiler the controller is arranged to be able to activate the boiler if a primary zone is active and is not at the set temperature.

Preferably the controller is arranged to activate each primary zone for a specified period or periods of time. If during the specified period or periods the detected temperature in a primary zone is at a set temperature the controller outputs signals to the operating means in the primary zone such that the heat source is not operating until such time as the detected temperature is no longer at the set temperature and the controller then outputs signals to the controlling means to operate the heating or cooling source.

The term "primary" has been used to refer to a zone or room that is able to activate or "call" on the heating source. Preferably the controller polls each temperature detector. In an event that the temperature in a primary room or zone is not at a set temperature the controller is arranged to output signals to operate the heating/cooling source in the primary zone/room.

The term "secondary" has been used to refer to a zone or room that is not able to actuate or "call" on a central heating source such as a boiler. If a secondary zone is not at a set point temperature the controller may poll the primary zone or zones and will only output a signal to actuate the heating/cooling source in the secondary zone if at least one primary zone is active. It will be appreciated that a secondary zone may be used with electric radiators and the controller is arranged to output an operating signal to the heating/cooling source in the secondary zone only if a primary zone is active. Further detail of the control of the secondary zone or zones is detailed below.

Where the heating source is a radiator in a central heating system the primary zone controller is arranged to fire up or actuate the boiler if it is not already fired up.

If the heating source is an electric radiator or a cooling unit the controller is arranged to operate the radiator or cooling unit. Similarly if the heating or cooling source is an underfloor heating system for the room the controller is arranged to operate the underfloor heating system.

The controller is also arranged to be able to allocate a second controlled room in the building to a first secondary zone. Preferably the controller is arranged to activate the or each secondary zone for a specified period or periods of time. If during the specified period or periods the detected temperature in a secondary zone is at a set temperature the controller outputs a signal to stop the heating or cooling source in the secondary zone from operating until such time as the detected temperature is no longer at the set temperature and the controller outputs a signal to the controlling means to operate the heating or cooling source. The controller interrogates the or each primary zone while the secondary zone is in an active time period. The controller will only output a signal to operate the control means in the secondary zone or room if the control means in at least one primary zone is active.

It will be appreciated that if a secondary zone is active and one or more primary zone is active but up to temperature the secondary zone remains active and can operate. Once all of the primary zones are inactive the secondary zone must also be inactive.

If the first secondary zone is active the controller may receive temperature data relating to a detected temperature in the first secondary zone. If the detected temperature is not equal to the set temperature the controller may send an "on" signal to the operating means controlling the heating or cooling source in the first secondary zone. The signal will be an "on" signal turning the heating or cooling source on if a primary zone is active.. If the heating or cooling source in a primary zone is not operating and the primary zone is not active then the controller does not signal the operating means to turn the heating or cooling source in the secondary zone on.

The term "secondary" has been used to refer to a zone or room that is able to activate or "call" on a heating source in the respective secondary room only if a heating or cooling source in a primary zone is active. If the heating source is a radiator in a central heating system the controller can only operate the radiator in the secondary room/zone to be on if there is at least one primary zone which is active.. If a primary zone is not active the radiator in the secondary room cannot be controlled to be active.

The system may be arranged to have a first and a second primary zone. If the secondary zone is active the heating/cooling source in the secondary zone will receive an "on" signal if either of the primary zones is active.

It will be appreciated that if the heating system is a wet central heating system in which a boiler supplies hot water to series of radiators in separate rooms in a building this has an advantageous effect. If a primary zone drops below a set temperature the controller sends a signal to the boiler to activate the boiler and also sends a signal to the operating means, such as a radiator valve, to allow hot water to flow through the radiator in the primary zone. If a secondary zone drops below a set temperature the controller interrogates the primary zones to ascertain whether a primary zone is active and whether operating means controlling the heating or cooling means in the primary zone is operating. If the operating means in the primary zone is active the operating means in the secondary room is activated. It will be appreciated that where the system is has a centrally located boiler the controller is arranged to signal the operating means in the secondary zone to be on if the boiler is already active (since the primary zone operating means is on) but the controller is arranged so that the operating means in the secondary zone is not signalled to be on if the boiler is not active. In simple terms the controller is set up so that if the primary zone is not at the set temperature the boiler will be activated (or the zone can "call" on the boiler) but if the detected temperature in the secondary zone is not at the set temperature the boiler will not be activated by the detected lower temperature in the secondary zone but the operating means in the secondary zone will be turned on if the boiler is already active. The secondary zone cannot "call" on the boiler to activate it.

In some embodiments the secondary zone may be a slave zone linked to a primary zone. If a primary zone has a secondary zone linked to the primary zone the primary zone may be referred to as a master zone and the linked secondary zone may be referred to as a slave zone. In order to avoid confusion the terms master and slave zone will be used for a situation where a secondary zone is linked to one primary zone. If a secondary zone is linked to more than one primary zone it may be referred to a parent (primary) zone and a child (secondary) zone. A slave zone is arranged such that the operating means in the slave zone is controlled to be active if the operating means in the master zone is active. The second temperature detection means in the slave zone may have a set point temperature that is the same as or different from a set temperature of the master zone. A child zone is linked to more than one primary zone and the operating means in a child zone is controlled to be active and the heating or cooling source may operate if any one of the linked primary zones is active.

An example of a master and slave arrangement of primary and secondary zones may be in the case of a bedroom and an ensuite bathroom. As the ensuite bathroom is a slave of the bedroom the heating or cooling means in the bathroom can only be activated if the primary master zone in the bedroom is active.

In a slave zone the activation of the heating or cooling means is controlled to be the same as that of the master zone. Accordingly the heating cooling source in the slave zone will be activated with the activation of the heating or cooling source in the master zone, and will be controlled to be deactivated at the same time as the heating or cooling source in the master zone is controlled to be deactivated.

In a parent and child arrangement a landing area may be allocated to be a child zone and two or more bedrooms off the landing may be allocated to be primary zones. The child zone can be active and heat or cool the landing/ secondary area if either or any of the linked primary rooms is active. If the linked primary zones are not active the child zone is not active.

In some embodiments the or each secondary zone may not be linked to a primary zone. The zones may be referred to simply as primary and secondary zones. There may be more than one primary zone. The controller may control the operating means in the or each primary zone in response to parameters. One of the parameters may be data from the temperature detection means. If data from the temperature detection means indicates that the detected room temperature is below the set point temperature for that room the controller signals the operating means to be active. The controller also receives data from the temperature detection means in the secondary zone. If the data from the temperature detection means in the secondary zone indicates that the temperature in the secondary zone is below a set point temperature for the secondary zone the controller preferably interrogates the heating or cooling source in the or each primary zone and if the operating means in one of the primary zones is active the controller outputs a signal to the operating means in the secondary zone to operate. It will be appreciated that if there are a number of primary zones a secondary zone operating means can be on if the operating means is active in any one of the primary zones.

In contrast if the secondary zone is a slave or child zone only the linked master zone or linked primary zones are interrogated. It will be appreciated that a slave or child zone is active only if the linked primary zone is active. It will also be appreciated that the set temperature of the secondary slave zone may be the same as, or higher, or lower than that of the master or linked primary zone.

In known systems it is known to have a whole building on a timer control. It is has been a problem that parts of the building are heated or cooled but are not in use and so fuel is wasted in heating or cooling parts of the building that do not require it. It has also been known to divide a building into zones and to control each zone independently. Areas such as hallways and bathrooms have been noted to be a problem and either these are allocated to a zone and have to be controlled independently or they are set to be heated or cooled at all times that the system is on for any room.

It will be appreciated that there may be a fuel economy by reducing the time that a secondary zone is on. In some embodiments this can be because the secondary zone is a slave zone and the master zone is not active. In other embodiments the secondary zone will not be active if there is not an active primary zone.

In some embodiments a first secondary zone may be linked to the first primary, and master, zone and also to a second primary, and master zone, and the controller will control operation of the heating or cooling source in the first secondary zone if either the first or the second primary master zones is active. As described above the secondary zone in this arrangement may be referred to as a child zone and the or each linked primary zone may be referred to as a parent zone. A hallway as a child zone may be linked to both a living area as a primary master zone and a kitchen as a primary master zone. As such the heating or cooling source in the hallway will be controlled to be able to be active if either of the kitchen or living room master zone is active. However, if neither the kitchen nor living room master zone is active the controller will control the heating or cooling source in the secondary zone to be inactive. Similarly, if a bathroom as a secondary zone is linked to two bedrooms as primary master zones the heating or cooling sources in the bathroom can be active if either of the primary master bedrooms is active.

The use of primary and secondary zones and of master and slave or parent and child zones is an important aspect of the invention and will be further described below in more detail. In addition as discussed in more detail below the use of an intelligent controller that analyses occupancy data to predict occupation of a zone is important.

Preferably the parameters are input to the controller or may be calculated by the controller.

In one embodiment the input parameters may comprise a schedule of times. Preferably the schedule of times can be input to the controller by a user using an input means. The times preferably indicate at least a first on time and an off time for each zone. The controller may be arranged to control the operating means in a respective zone to operate the heating or cooling source when the schedule of times for the respective zone is set to on. The "on" period can be referred to as the active period. In addition or alternatively the input parameters may comprise a set point temperature for each zone. A set point temperature for each zone may be the same or each zone may have a different set point temperature. It may be desirable to have a higher set temperature for a kitchen or living room than for a bedroom or bathroom. In a preferred embodiment a number of set point temperatures may be input for each zone. A number of time periods for a zone may be input and a different set point temperature may be input for each time. In this way a temperature of a zone may be varied over a number of a time periods. It may be desirable to input parameters such that a bedroom is relatively cooler in early evening and is warmer just before an occupant wishes to go to bed. The parameters may be input such that the bedroom is also relatively cooler during the sleeping period.

In a preferred embodiment each controlled room is provided with a temperature detection means arranged to detect a temperature in the room and to output temperature data. Preferably the controller is arranged to receive data from each of the temperature detection means. In some embodiments the temperature detection means may be a thermostat. Preferably the thermostat is a wireless thermostat and is arranged to output temperature data to the controller. The controller may be arranged to compare the temperature data output from the temperature detection means with an input temperature set point or a calculated temperature set point for the controlled room. In some embodiments a user may input a desired temperature set point for each controlled room into the controller. In some embodiments the temperature detection means includes an input means arranged to manually adjust a temperature set point in the room. The temperature detection means may be arranged output an adjusted temperature set point setting to the controller.

Preferably the controller is arranged to control the operating means to stop operating if the detected temperature is at the desired temperature set point.

The temperature data from the temperature detection means may be a parameter. The desired temperature set point for each controlled room may also be a parameter input to the controller.

In some preferred embodiments the first controlled room has an occupancy detector means arranged to detect room occupancy and to output occupancy data to the controller. The occupancy detector means may comprise one or more of a heat detector, a luminance detector, a motion sensor, an electrical load sensor, and a noise sensor. Other detection methods might be selected from one or more of the foregoing or one or more of a radio signal sensor, or radio signals or phone GPS; or phone signal or phone GPRS detector, a network traffic sensor sensing internet traffic when people are using it; an air pressure sensor detecting movement of bodies around a room, or opening of doors and/or windows; a CO2 sensor detecting people's extended presence in a room; detection of data inputs detecting occupants changing settings on the device; a smart meter detecting usage of gas or electricity in the building; a flow meter detecting water usage indicating occupation of the building; a current sensor detecting energy usage or a change in energy usage; detection of infrared signals such as from a remote control; RFID detecting a tag provided for a user; a bluetooth key detection for a user; CCTV and IR cameras providing image recognition and security surveillance; beam breaks, provided to sense entry into an area or building; GPRS arranged to receiving SMS or phone instructions; a humidity detector arranged to detect humidity changes in the atmosphere as a result of occupation of a room.

In addition the detector may also detect humidity, smoke, carbon dioxide or other parameters. Data from the detector may also be arranged to detect an open window or door. Alternative detectors monitoring smoke or carbon monoxide may also be provided and arranged to communicate with the controller. Preferably the controller is arranged to store occupancy data in a storage means and to access occupancy data from the storage means. In some embodiments a user may be able to input occupancy data or occupancy schedules.

The controller may access information including input occupancy schedules and/or historical occupancy data and use the data to calculate predicted occupancy data based on a number of days of historical or input occupancy data. The number of days may vary from 1 to 60 days or more preferably from 1 to 30 days or more preferably from 2 to 14 days or optionally from 5 to 14 days or most preferably from 7 to 14 days.

Preferably the controller is arranged to control a temperature in at least a first controlled room in accordance with predicted occupancy data relating to the controlled room.

In a preferred embodiment the controller is arranged to receive input data from the occupancy detector in a room and is arranged to control operation of the heating or cooling source in the room either in response to a signal from the occupancy detector that the room is occupied or if the controller calculates that occupancy is predicted.

Alternatively or in addition the controller may be arranged to use occupancy data to predict when a room will be occupied. The controller may be arranged to control the operating means to operate the heating or cooling means in the event that occupancy of the room is predicted. Preferably the predicted occupancy is based on received occupancy data. The occupancy data is preferably calculated from historical occupancy data. In other embodiment the predicted occupancy data may be calculated from input occupancy data.

The occupancy data from the occupancy sensor and/or the input occupancy data and/or the predicted occupancy data may be one or more parameters.

It will be appreciated that the use of predicted occupancy data based on historical occupancy data allows the system to learn the likely occupancy of each zone at a time of day and to ensure that the zone is at the desired set point temperature. In this way the building and each zone can be arranged to be more comfortable for the user. In addition it will be appreciated that the system is able to learn when a zone is not occupied and to control the heating or cooling source to be inactive when the zone is not occupied. In this way it will be understood that energy may be saved as a zone is not being heated or cooled unnecessarily. The use of predicted occupancy data is an advantage of the invention.

The occupancy data may be stored in the controller or in a storage means. The storage means may be integral with the controller or may be connected to the controller. In some embodiments the storage means may be physically connected to the controller. In other embodiments the storage means may be remote from the controller. In some embodiments the storage means may be located in the "cloud" and may be accessed by the controller as required.

One or more of the parameters used by the controller may be stored in the storage means either in the cloud or connected to the controller.

In some embodiments the occupancy data may be tagged or otherwise marked to indicate that the period is a holiday period. Preferably occupancy data having a holiday tag is not used in predicting the occupancy of a zone.

It will be appreciated that a number of rooms in a building may be selected to be a primary zone. In each primary zone the controlled room preferably has a sensor detecting occupancy of the room. In a preferred embodiment at least two rooms are selected to be primary zones. Preferably three or four or more rooms may be selected to be primary zones.

Preferably each primary zone has an occupancy detector. Preferably each secondary zone has an occupancy detector. It will be appreciated that a slave zone or child zone does not require an occupancy detector as operation of the heating or cooling source in a slave or child zone is controlled by operation of the heating or cooling source in one or more master or primary zones to which the slave or child zone is linked.

It is preferred that the controller receives temperature data from the temperature sensor. The controller is arranged to compare the received temperature data to the desired set point temperature for the room at the time of day. If the temperature data indicates that the room is cooler than the desired set temperature the controller is arranged to be able to control operation of the heating source to increase the temperature in the room. Alternatively if there is a cooling source and the temperature is higher than the desired set temperature the controlling means may be arranged to be able to control the cooling source to cool the room.

Preferably the controller is arranged to receive inputs for at least a first, second and a third desired temperature or set point temperature for each controlled room. The first set point temperature may be a temperature at which it is desired that the room should be maintained if the room is not occupied. This set point temperature may be referred to as an "away" temperature. The second set point temperature may be a temperature at which it is desired that the room should be maintained if the room is occupied and this may be referred to as an "active" temperature. The third is a set point temperature if the zone is apparently unoccupied during a pre-set hours, such as night-time and may be referred to as a "night time" temperature. In some embodiments the set point temperatures may be set to any temperature from 0° to 30°C or preferably from 1° to 29 C or more preferably from 4° to 29 C or most preferably a temperature from 4 to 28°C.

If the first set point temperature is selected as say 4°C the system will not control the operating means to operate the heating source unless the detected temperature falls below 4°C. Effectively this means that the system is off when the building is unoccupied unless the temperature falls below 4°C. Typically the first set point temperature or away temperature maybe set to a temperature between 4°C and 10°C.

Preferably the controller will control the operating means to operate the heating source if the detected temperature is less than 4°C. The system is preferably able to enter a frost prevention mode and prevent the temperature of any of the controlled rooms falling below 4°C.

In some embodiments the system may be arranged to output one or more information messages if the system enters the frost prevention mode. The or each message may be a push notification to the app on the phone, or a text message, or an SMS message or an email message. There may be more than one message. Preferably the controller is provided with at least one set of contact details which may be stored in the storage means and the controller may access the or each set of contact details to output the one or more information messages. The controller may be arranged to send one information message by a means such as a text and at least one other information message by an alternative means such as an email.

Preferably the second set point temperature or active temperature may be set at a temperature from 10°C to 30°C and more preferably from 12°C to 25°C and most preferably from 16°C to 23°C.

Preferably the third set point temperature or night-time temperature may be set to a temperature from 4°C to 22°C, or from 6°C to 20C, or more preferably from 8°C to 18C and most preferably from 10°C to 16°C.

In addition or alternatively a user can input to the schedules by manually adjusting a set temperature for a room.

It will be appreciated that the active temperature may be the same in each controlled room. Alternatively and preferably the second set point temperature may be different in each room. For example a first controlled room may be a kitchen and it may be desirable to have an active temperature of 20°C. A second controlled room may be a bedroom and it may be desirable to have an active temperature of for example 16°C. The time period for which the third temperature will be activated can be set by the user. This will most likely be the night time when there is no recorded occupancy in the room but the user would still like the rooms to be warmer than if they were away. It will be appreciated that the first, second and third set point temperatures can be input into the controller by a user of the building.

In some embodiments the desired first and second temperatures may be input into the controller directly. In other embodiments a user interface may be provided. The user interface may be integral with or connected to the controller. The user interface may be directly connected to the controller or may be remotely connected to the controller. The user interface may be provided in the form of a programme or "app" that can be run on a computer or mobile phone or tablet or other device arranged to communicate with the controller either directly or indirectly such as by means of the internet or local area network. The user interface may be text based or graphics based or a combination of the two. In some embodiments the user may be able to select the interface to be used, either text or graphical or a combination thereof.

Preferably the controller is arranged to be controlled remotely. The system may be remotely controlled by a user to start heating or cooling the or each primary zone. The controller may be remotely controlled to turn the system off or to set the system into a frost protection mode.

The controller may be arranged to receive additional information. The information may in some embodiments be received from the user interface. The information may include proximity data relating to one or more users of the building. The proximity data may be from an RFID tag or may be GPS data or cell phone triangulation from a device such as a "smart phone".

The proximity data may be used to update predicted occupancy data. The controller may be arranged to change predicted occupancy data if the proximity data indicates that a user of the building may be entering the building earlier than anticipated.

In some embodiments the controller may be arranged to output a signal such as a message to a remote device if the occupancy detector senses an occupant of the room at a time that is not predicted. Such an occupant may be an intruder. Alternatively the controller may output a signal to an alarm.

The controller may be adapted to carry out other functions such as controlling lighting in the controlled rooms. It will be appreciated that this may be enabled by adding a wireless or wired relay to control the electrical power to the lighting. In some embodiments the controller may be arranged to control the lighting to be on when the building is not occupied to simulate occupancy. The controller may also receive inputs from other devices such as a fire alarm and a security system. The controller may also be arranged to control the operation of electrical outlets and thereby the operation of electrical goods connected to the electrical outlets. Additional devices may be controlled by the controller such as security devices such as locks, lights or a siren.

It is desirable that the controller or the user interface can receive an input that the user is leaving the house. The controller may be arranged to receive an input for a period of time that the user will be away. This may be a number of hours or days or weeks or even months. This may be designated a holiday mode. The controller is desirably arranged to control the heating or cooling system to be off, preferably when the heating or cooling system is off the temperature in the rooms is monitored and the frost prevention mode is entered if the temperature output from the temperature sensors is less than the first set point temperature. In addition in the holiday mode the controller may be arranged to control lighting in the controlled rooms to simulate occupancy.

In some embodiments the controller may be arranged to receive additional information from remote sources. One source may be a weather forecast. Another remote source may be an indication of the outside temperature and/or weather and/or solar index and/or UV index indicative of expected sunshine. The system may also be arranged to receive temperature data from a temperature sensor located outside the building. In a preferred embodiment the controller is arranged to receive information relating to the weather and in particular whether the sun is shining or will be shining within the next 3, 6, 9, 24 or 48 hours.

Preferably the controller is adapted to measure a time taken to change the temperature in a controlled room from a temperature when the cooling or heating source is not operating to a desired temperature. Typically the controller may be arranged to measure the time taken to warm a room up from a temperature to a desired temperature. The warm up time may vary from room to room depending on the size of the room and the furnishings in the room and on characteristics such as aspect, wall materials, number of windows. Preferably the controller is adapted to store a measured warm up period for the or each controlled room and to use a predicted warm up period to control operation of the heating source such that the controlled room has reached the desired temperature by the time that occupancy of the room is predicted.

In some embodiments the controller may be arranged to store data relating to the warm up period for each zone such as a duration of the warm up period and the controller may be arranged to compare a warm up duration with typical warm up durations for that controlled room. It will be appreciated that fuel can be saved by taking into account the warm up duration for each zone as it allows the heating or cooling source to be active only for the necessary period for that zone. Earlier systems have typically required the heating or cooling to be activated so that the whole building reaches a desired temperature and this takes longer and required more fuel than the applicant's system. The warm up duration calculation may take information from other sources when calculating the next warm up duration. These may include, number of other rooms that are also being heated, external temperature, humidity and solar index and the temperatures of the rooms around it. The controller may be arranged to output an error message if the warm up duration is longer than a typical warm up duration for the controlled room. A longer duration of the warm up period may indicate a problem with the heating system or heating source or the control means. Alternatively it may indicate that a window or door is open.

Preferably if a first primary zone has a warm up duration that is longer than expected the controller is arranged to be able to output signals to operate adjacent zones to increase a speed at which the first primary zone warms up.

As discussed above the controller may be arranged to receive information relating to the weather and in particular information relating to whether the sun is shining. If the system is a heating system the controller is arranged to calculate a new desired temperature lower than the desired temperature. Preferably the new desired temperature is from 0.1 to 5°C or preferably from 0.2 to 4°C or more preferably from 0.3 to 3°C or most preferably from 0.5 to 2°C lower than the desired temperature.

It has also been found that if the sun is shining the temperature to which the controlled room is raised can be set lower than the desired temperature and the perceived temperature in the room is still comfortable. In this way fuel can be saved in heating the building.

The controller may be arranged to calculate a warm up time based on the outside temperature. If the outside temperature is low the warm up time may be extended so that the controlled room reaches the desired temperature at the time that occupancy is predicted.

On the other hand if the outside temperature is relatively high the warm up time can be shortened and the controlled room will still reach the desired temperature at the time that occupancy is predicted.

The control means controlling operation of the heating or cooling source may comprise a radiator valve when the heat source is a radiator, or a manifold valve when the heat source is under floor heating. Alternatively if the heat source is an electric heating device the control means may be a switch or a relay or a wireless relay. The radiator valve may comprise a means of adjusting a temperature and preferably the control means is arranged to output a signal if the radiator valve is manually adjusted. The controller preferably uses the output signal to update the desired temperature, but can also record a change in temperature on a valve and update the controller to this new temperature.

The controller may also be arranged to control a hot water supply to the building. Preferably the controller is arranged to be able to heat the hot water, such a domestic hot water, at a time when the system is not operating to heat the building. By controlling the scheduling of heating the hot water the system is able to heat the water at a time when there is not also a call for the system to heat the building so avoiding situations in which the boiler is overloaded by a demand for hot water and a demand for heating.

The controller may also be arranged to control to heat the building with a reduced number of radiators at any one time. By controlling the scheduling of heating, the system is able to heat individual zones faster, with a reduced warm-up period, and so avoid situations in which the boiler is overloaded by a demand for heating all the building radiators at the same time. In this way fuel can be saved in heating the building by taking account of this warm-up period.

As referred to above an important aspect of the invention is the allocation of a controlled room to a first primary zone. The system will be discussed in more detail with reference to a heating system although the skilled man will realise that the principles described can equally be applied to cooling systems. As discussed above the controller is arranged to operate a control means in the controlled room of a primary zone if occupancy of the room is predicted. The control means is arranged to operate a heating source in the room such as a radiator. In addition or alternatively the controller is arranged to operate a boiler to supply heat to the heating source if there is an occupancy predicted in the primary zone.

Preferably the system comprises two or more primary zones. Preferably the controller is arranged to operate the boiler of one or more of the primary zones in accordance with input parameters.

The controller may be arranged to operate on schedule. The schedule may be input by the user. If the controller is arranged to operate on an schedule it can be referred to as being in a timer mode. Alternatively the controller may be arranged to be in an "intelligent" learning mode. In the "intelligent" mode the controller is arranged to use the occupancy data to predict future occupancy data and to operate the system to heat the primary zones in accordance with the predicted occupancy of each zone. In some embodiments the controller is also arranged to receive data relating to detected occupancy and is arranged to control the system to heat zones in response to real time occupancy detection and can be described as being reactively controlled.

In the Intelligent mode the controller is able to heat a number of primary zones in order as the occupancy is predicted. It is believed that each primary zone heats much faster than in prior art systems. As each zone may require heating at a different time the boiler has a reduced demand overall and the warm up duration is reduced, thereby saving energy.

Preferably the system is arranged so that a parameter calling for the heating to be on in any primary zone will cause the controller to operate a boiler. In some embodiments a secondary zone may be arranged with a first primary zone or a second primary zone. The controller is arranged such that a secondary zone cannot cause the controller to operate the boiler and the operating means cannot operate the heating or cooling means in the room if the operating means in at least one of the primary zones is not operating. As discussed above the controller may be arranged such that if a secondary zone is not at a desired temperature the controller in the secondary zone can control the operating means in the secondary zone to heat the secondary zone if any primary zone in the building is operating.

In some embodiments a number of primary and/or secondary zones can be linked to form a group. Each group can be controlled collectively. The system can be arranged to have a group of zones such as a first group comprising a kitchen and living room and a cloakroom and a second group comprising a first bedroom and a second bedroom and a bathroom.

The controller may be arranged to control a group of zones collectively. If a proximity signal or other signal is received indicating that a user is returning to the building early the controller may be arranged to update a predicted occupancy for a group of zones, such as the first group. Desirably the controller is arranged to update the predicted occupancy for the first group of rooms without updating the predicted occupancy for the second group. This can be advantageous in that the second group are not required to be warmed early.

In some embodiments the zones which are updated by the early signal are automatically selected to be those which would be operational within a set period of a first zone becoming active. Preferably the set period is from 5 minutes to 120 minutes or more preferably from 10 mins to 90 mins or more preferably from 30 mins to 60 mins. Accordingly if an early signal is received the first zone is controlled to warm up and each zone which is predicted to be occupied within 30 mins of the first zone becoming occupied is arranged to be brought forward.

In some embodiments the early signal may override the group allocation. In some cases for example a first zone to be occupied may be a kitchen and a second zone may be a bedroom. Even if these zones are in different groups these rooms may be brought forward and the remainder of the zones will only be brought forward if they fall within the set period.

Preferably a secondary zone comprises a control means and a temperature sensor. In most embodiments the secondary zones do not comprise an occupancy detector. As described a secondary zone is not able to operate the control means to turn the heating source on unless the boiler is operating. A secondary zone can be heated by the system if any primary zone is operational.

In some embodiments the system comprises a linked zone. A linked zone is controlled by a primary master zone. A linked zone comprises control means. A heating or cooling source in a linked zone can be only be operational if the heating or cooling source in the primary zone by which the linked zone is controlled is active. In some embodiments the linked zone may comprise a temperature sensor. A linked zone may be controlled by more than one master zone. Accordingly a linked zone may be controlled to be on by any one of a number of master zones. If the linked zone comprises a temperature sensor the set temperature in the linked zone may be set independently of the set temperature of the or each master zone. It will be appreciated that a secondary zone that is linked to only one primary zone it may be referred to as a slave zone.

It will be appreciated that if the temperature in a secondary zone is not at a second set point temperature the system will not operate the boiler if the or each linked primary master zone does not have a predicted occupancy and the control means in the or each linked primary master zone is not operating the heating source. It will also be appreciated that if the heating source is electrically operated such as an electric radiator the radiator on the secondary zone will only be active if the primary zone is active.

The system may be arranged such the system can be controlled to be in an override program and to heat or cool the building for a set duration. The set duration may be input at a time when the system is placed in the override program. The duration may be from 30 mins to 24 hours or alternatively from 1 hr to 18 hrs or more preferably from 1 hr to 12 hrs. The set duration may be adjusted while the override program is running. A desired set temperature may be adjusted for the duration of the override program. The override program may be referred to as a Boost. The Boost may be applied to all the zones in a building or some of the groups of zones or maybe applied to only some of the zones. The override program preferably causes all the zones to be heated or cooled irrespective of whether they are in a timer mode or a 'intelligent' mode. Preferably once the duration of the override program is finished the zones revert to the mode in which they were operating before the Boost was applied, whether that was a timer mode or an intelligent mode. It is desirable that the set point temperature for each zone also reverts to the set point temperature for that zone before the Boost was applied.

The system is also preferably arranged at least in the intelligent mode to review predicted occupancy schedules. It will be appreciated that there will be occasions when a zone is being predicted to be used but a room is not occupied. The system can be set to respond to these periods of non-occupancy in a number of ways. In one setting the controller can be set to be purely reactive so that the zone is made active only when occupancy is detected in the zone or room. If the room is unoccupied the controller will signal the control means in that room to be inactive and the heating or cooling of the room will be ended. The controller will signal the zone to be active when occupancy of the zone is detected again. This setting can be termed "reactive". In the reactive setting the controller may not use predicted occupancy times to make the zone active prior to predicted occupancy so there may be a period of time when a zone is occupied but is not at the set point temperature.

In an alternative setting of the intelligent mode the controller uses a combination of occupancy prediction and occupancy detection. This may be referred to as a combination setting. In the combination setting the controller uses occupancy prediction to make the zone active when occupancy is predicted. In addition the controller can make the zone active if the occupancy is detected unexpectedly. Preferably the controller makes the zone active prior to predicted occupancy in order to bring the zone to the set temperature before the predicted occupancy.

In a further alternative setting of the learning mode the controller uses a combination of occupancy prediction and occupancy detection and a calculation of a bridging period between occupancy periods to increase the comfort of users of the building. The controller can be arranged to keep a zone active between a period of occupancy in order to prevent the zones from cooling down. The controller may be provided with an input for a duration of a bridging period over which the zone should be kept active. The duration of the bridging period may be preset or may be input by the user. The duration of the bridging period may be adjustable. The bridging period may be from 5 mins to 6 hours or from 10 mins to 4 hrs or from 15 mins to 2 hrs or from 15 mins to 1 hr. It will be appreciated that as the bridging period is increased the overall fuel consumption for heating or cooling the building may be increased.

Preferably a room has to be occupied for a certain period of time before the controller will activate the zone and signal the valve on the radiator to be open. Preferably a detected occupancy for a period of time is required before the controller will make a room active. Preferably detected occupancy must be over an activation threshold for a period from 1 to 30 minutes or from 2 to 20 minutes or more preferably from 3 to 15 minutes, or from 4 to 10 minutes or more preferably from 5 to 7 minutes. In a preferred embodiment the period is set to be 5 minutes, but it may be changed to 2, 7, 10, 15 minutes. Once a room is active then occupancy detection sensed over the activation threshold will keep the zone warm for a period of time. This 'retrigger' interval may be from 1 to 120 minutes or 2 to 60 minutes or from 3 to 45 minutes. In a preferred embodiment the retrigger interval may be from 4 to 30 minutes or may be from 5 to 20 minutes or may be from 5 to 15 mins. In a particularly preferred embodiment the retrigger interval is set to 10 minutes. It will be appreciated that if no occupancy is detected in the room for a certain duration then the room will be deactivated.

In a particularly preferred embodiment the system may be arranged to receive multiple set temperatures for each zone. As described it may be desirable to input at least two set point temperatures for the or each zone when the system is in a timed mode. These may be an off and an on set point temperature. In a particularly preferred embodiment the system is arranged to receive at least three set point temperatures for each zone when the system is in the learning mode as already described. It will be appreciated that the second set temperature may be varied significantly depending on the preferences of the user. The second set temperature may also be different in different zones. For example a user may prefer the second set temperature in living room to be higher than a second set temperature in a bedroom. A second set temperature in a bathroom may be higher than a second set temperature in an adjacent bedroom. A third set temperature may be input for each zone for night time use. This may be particularly desirable in zones which are bedrooms as a desired overnight temperature may differ from either a second set point or a first set point depending on the preferences of the user. In some embodiments the occupancy detection means may not detect occupancy overnight.

If the system predicts that there will be occupancy at a particular time and then none is sensed it is classed as a 'no show'. The system will maintain the desired set point temperature for 15, 30, 60, 90, 120 minutes after the occupancy was supposed to be sensed and if there is still no show the system will revert back to as if the zone is unoccupied again. Preferably the no show period may be adjusted by the user depending on the value placed on comfort in relation to fuel cost. A most preferred period may be from 15 to 60 mins and more preferably from 15 to 30 mins.

In some preferred embodiments the system is arranged to send a message to the user if there is a power cut to the building or if there is a problem with an internet connection, either externally of the building or with a device in the building through which an internet connection is provided. Preferably the control system is in communication with a remote server or monitoring system periodically. The period may be every from 1 in to 1 hr, or from 5 mins to 30 mins or from 10 mins to 15 mins. The communication may be initiated by the controller in the building or by the remote server or monitoring system. Preferably the server or monitoring system is arranged to record the communication and more preferably the server or monitoring system is arranged to output an error message if a number of communications are missed. The number of communications missed may be set at 1, 2, 3, 5, 10 or more. The number of communications missed may be specified to be consecutive communications. In a preferred embodiment the number of missed communications missed may be set to be three consecutive communications although it will be appreciated that the number may be varied. The server may be arranged to record the unique IP address of the control unit and to be able to send a message to a designated contact if the error message is output since this might indicate that there is a problem with the router or power or with the local internet connection.

The control unit may be arranged to output additional data relating to the operational state of the components of the system.

There is described a use of a system in accordance with the first aspect of the invention to heat or cool a building.

In accordance with another aspect of the invention there is provided a method of heating or cooling a building comprising installing a system as set out in claim 13 of the appended claims. The method may comprise selecting a first controlled room to be a primary zone;
arranging a first heating or cooling source in the first controlled room to be controlled by a first operating means;
installing a first temperature detection means
the controller being arranged to output signals controlling the operating means to heat or cool the room, characterised in that the controller is arranged to allocate a first room in a building to a first primary zone and to allocate the first room in the building to a first primary zone and to be able to allocate the second controlled room in the building to a first secondary zone and wherein
the controller is arranged to control a temperature in the first secondary zone in response to operation of the heating or cooling source in the first primary zone.

In an embodiment of the invention there is provided a method of heating or cooling a building comprising installing a system in accordance with an aspect of the invention;
selecting a first controlled room to be a primary zone;
arranging a first heating or cooling source in the first controlled room to be controlled by a first operating means; installing a first temperature detection means arranged to detect a temperature in the first room and to output temperature data;
selecting a second controlled room to be a secondary zone; arranging a second heating or cooling source in the second controlled room to be controlled by a second operating means;
installing a second temperature detection means arranged to detect a temperature in the second room and to output temperature data;
selecting a third controlled room to be a primary zone;
arranging a third heating or cooling source in the third controlled room to be controlled by a third operating means;
installing a third temperature detection means arranged to detect a temperature in the third room and to output temperature data;
providing a controller arranged to output signals controlling the first, second and third operating means to heat or cool the respective room;
characterised in that the controller is arranged to allocate a first room in a building to a first primary zone and the third room to a second primary zone and to be able to allocate the second controlled room in the building to a first secondary zone and wherein
the controller is arranged to control a temperature in the first and second primary rooms in response to a respective temperature output from the first and second rooms and in the first secondary zone in response to a temperature output of the second temperature detection means when the operation of the heating or cooling source in one of the first primary zone or the second primary zone is active.

Also described is a method of controlling a temperature in a first room and a second room, wherein the first room and the second rooms are provided with a heating or a cooling source and a respective first and second operating means arranged to control operation of the respective first and second heating or cooling means; each of the first and second rooms being provided with a respective first and second temperature detection means and the first room being provided with an occupancy detection means; wherein a controller allocates the first room to a primary zone and the controller is able to allocate the second room to a secondary zone and wherein the controller is arranged to control the operating means in the primary zone in response to occupation or predicted occupation of the primary zone and to control operation of the control means in the secondary zone in response to operation of the control means in the primary zone.

There is described a building comprising a heating or cooling system in accordance with the first aspect of the invention.

There is described a building having a temperature controlled in accordance with a method disclosed herein.

According to another aspect of the invention there is provided a kit of parts in accordance with claim 15 of the appended claims.
The kit when assembled comprises a system in accordance with an aspect of the invention the kit comprising at least:
a controller unit arranged to be able to allocate a first room as a first primary zone, a second room a secondary zone and a third room as a second primary zone;
at least three control means
at least three temperature detectors.

There is described a controller arranged to be able to communicate with a first operating means and a first temperature detection means; a second operating means and a second temperature detection means and a third operating means and a third temperature detection means; the controller being arranged to receive data from the first, second and third temperature detection means and to output signals controlling the first second, and third operating means wherein
the controller being adapted to allocate the first operating means and the first temperature detection means to a first primary zone and to allocate the second operating means and the second temperature detection means to a secondary zone and to allocate the third operating means and the third detection means to a second primary zone;
and wherein the controller is arranged to output signals to the respective operating means in response to a respective temperature output from the first and third temperature detectors and to output signals to the second operating means in response to a temperature output of the second temperature detection means when at least one of the first or second operating means is active.

The invention will now be described by way of example only with reference to the following drawings in which:
**Figure 1** is a schematic layout of a ground floor of a building in which the system is installed;

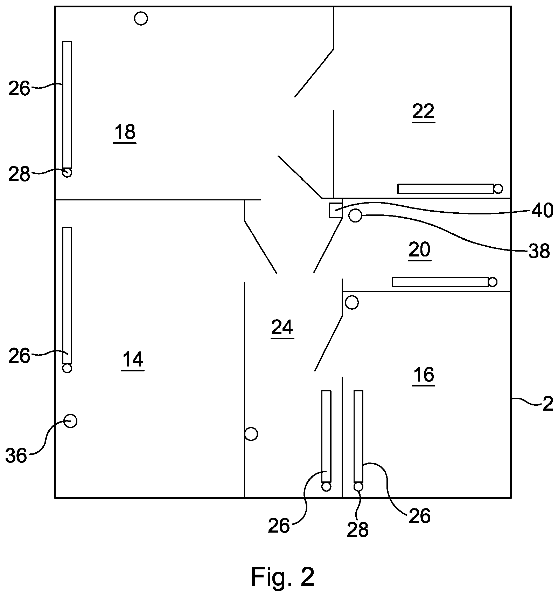

**Figure 2** is a schematic layout of a first floor of the building of Figure 1.
**Figure 3** is a schematic drawing of a layout according to the Prior Art;
**Figure 4** is a schematic drawing of a layout with linked master and slave zones;
**Figure 5** is a schematic drawing or a layout with linked parent and child zones

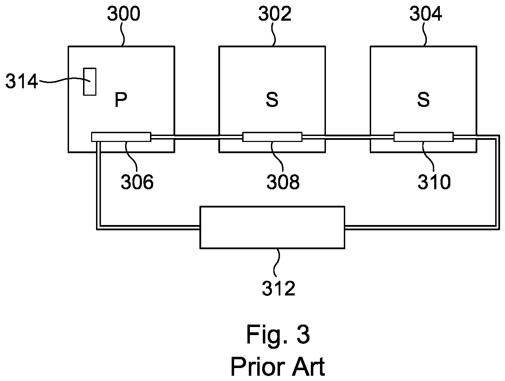

A layout according to the prior art is shown in Figure 3 and comprises a number of rooms 300, 302, 304. Each room has a respective heating means 306, 308, 310 which comprise radiator connected to a boiler 312. A first room 300 has a thermostat 414 located in the room. When the thermostat indicates that a temperature in the first room is lower than a set temperature the boiler is activated and hot water passes through the radiators heating the first room and each of the second room 302 and third room 304. When the first room reaches a set point temperature the boiler is de-activated and there is no hot water passing through any of the radiators 306, 308 or 310.

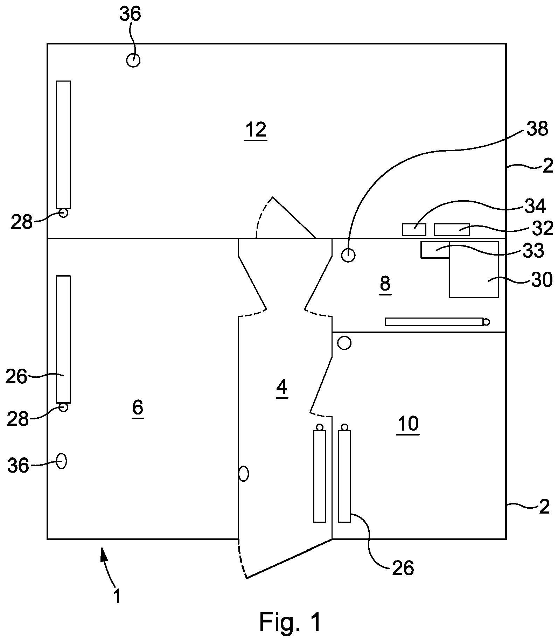

Figure 1 is a schematic illustration of a typical building 1 having a ground floor and a first floor. Each floor comprises a number of rooms 2. On the ground floor the building comprises an entrance hall 4, a living room 6, a cloakroom 8, a study 10 and a kitchen 12. On the first floor the building comprises a first 14, a second 16 and a third 18 bedroom and a first 20 and a second bathroom 22 together with a landing 24. Each room has a respective radiator 26 and each radiator is provided with a wireless radiator valve 28. The radiator valve 28 is wireless and may be of the type comprising a battery powered Z-wave radiator valve head. A boiler 30 is provided in the cloakroom 8 but it will be appreciated that it can be located in any room. A central controller 32 is located in the kitchen and is wired to a router 34 linked to the internet. The controller 32 can have a panel provided an input means. The connection is wired using an Ethernet cable but could be wireless. The router 34 is also shown schematically in the kitchen. The controller is also connected to the boiler 30 by means of a boiler controller 33 or a boiler programmer. The boiler controller 33 is also arranged to communicate wirelessly with the central controller.

The controller is wired into the boiler system and can replace the house thermostat or boiler controller timer for a combination boiler. The boiler maximum and minimum temperature controls remain operative to ensure that the boiler operates safely. For a system boiler the controller is wired to replace the boiler thermostat. Hot water can remain under control of the existing boiler controller for the system boiler.

With some boilers the controller can be wirelessly connected.

A first room controlled room on the ground floor comprises the kitchen 12 and the kitchen is provided with a temperature sensor 36 arranged to communicate wirelessly with the controller and an occupation detector. In this example the temperature sensor and the occupation detector are provided in a single unit 36 comprising a Z-wave temperature probe and a motion sensor. The unit 36 is able to communicate wirelessly with the controller and is battery powered. The controller has allocated the kitchen 12 to be a primary zone.

A second controlled room on the ground floor is the living room 6 and this room is also provided with a combined temperature sensor and occupation detector 36. The controller has allocated the living room to be a second primary zone.

A third controlled room on the ground floor is the cloak room. This room has a temperature sensor 38 but does not have an occupation detector. The temperature sensor is built into the radiator valve. The temperature sensor 38 can communicate with the controller 32. The controller has allocated the cloak room to be a secondary zone.

A fourth controlled room on the ground floor is the entrance hallway 4. The controller has allocated the entrance hallway to be a child secondary zone. The hallway is linked to the master kitchen zone 12 and to the master living room 6.

On the first floor the controller allocated the first 14, second 16 and third 18 bedrooms to be primary zones and each room has a combined temperature sensor and an occupation detector 36. The first bathroom is allocated to be a secondary zone. The second bathroom is allocated to be a slave to the third bedroom. The first bathroom has a temperature detector 38. The second bathroom does not have a temperature detector. The landing is allocated to be a slave to the first bedroom. The landing 24 does not have a temperature detector or an occupation detector.

A repeater socket 40 is provided adjacent the third bedroom and bathroom to relay the messages from the central controller to any devices that are out of range of the central controller. The controller 32 is arranged to communicate with a remote server. The server stores data from the controller and communicates with remote user interfaces. An app may be installed onto a smart phone and a program may be provided on a computer. The user can input to the controller by means of the controller interface or the app or the computer programme.

Certain information is input to the controller 32 by the user to start the system. For each controlled room the user inputs a timer schedule for the heating to be active or inactive. The schedule corresponds to the periods of time in which the user expects each room to be occupied. The controller is arranged to operate in a timer mode in which the controller operates purely on the input schedule. Alternatively the controller can operate in an intelligent mode in which user input occupancy data and measured occupancy data from the occupation detectors is used by the controller and the combined data is stored and used to predict future occupancy of each room together with the start times and stop times for each room. When the controller is in the timer mode each zone has heating periods input when each zone is active. In the intelligent mode the active periods are defined by predicted or detected occupancy. In an active period the controller receives temperature data and outputs control signals to the operating means controlling the heating means to maintain a temperature in the zone at a preset temperature. The user can also input set point temperatures for each of the rooms with a radiator valve. If the controller is in timer mode the user can input a first active temperature. In the timer mode the user can select a number of 15 minute periods for the radiator to be on in each room and can also input the active temperature for each 15 minute period. The temperature may be the same for consecutive 15 minute periods or can be varied. In the active period the heating source in a room or zone will be operating if the detected temperature is below the pre-set temperature. Once the temperature has reached the pre-set temperature the heating source will be controlled to be inoperative or at a reduced state of heat output to maintain a constant room temperature, unless the detected temperature falls below the pre-set temperature in the active period.

If the controller is in intelligent mode the user can input an "away" temperature and an active temperature together with a night-time temperature.

The user can also input contact details such as an email address and a mobile phone number. The user may also input a password to secure access to the controller.

Operation of the system will now be briefly described in relation to the timer mode.

The system is in an off mode overnight or may be arranged to have low set point temperature in the sleeping period. The controller has a clock and when a first on period in the morning is entered the controller outputs a signal to the boiler 30 to fire up. The controller also outputs a signal to the radiator valve 28 in the first bedroom to move to an operating position and the radiator valve 28 allows hot water to pass into the radiator 26. The controller interrogates the temperature sensor in the first bedroom periodically to ascertain whether the room has reached the set temperature for the room for the period. Once the temperature has been reached the controller outputs a signal to turn the radiator valve off. In an alternative control setting the central controller is arranged to send a temperature set point to the radiator valve and to control the boiler to be on. The boiler remains on and the valve regulates the temperature of the room in which the radiator is located.

The timer schedule for bathroom 1 enters an on period after the on period for bedroom 1 is entered. Bathroom 1 is a secondary zone. The controller interrogates the primary zones for an active operating means and finds that the heating source in bedroom 1 is active and operating. The controller outputs a signal to operate the radiator valve in bathroom 1 and to activate bathroom 1. The boiler 30 is operating because there is a draw from bedroom 1 and hot water flows in to the radiator in bathroom 1. The controller checks the activation status of bedroom 1 and bathroom 1 periodically. When bedroom 1 (or all other 'primary' zones) are no longer active in the timer mode then the controller also deactivates bathroom 1. If, during the bedroom 1 active time, bedroom 1 was to come up to temperature, the valve in bedroom 1 would to close. However bathroom 1 would remain active as the timer for bedroom 1 is still active even though the bedroom 1 is no longer calling for heat.
The bathroom has a temperature detector but the radiator does not remain on even if the bathroom has not reached the set point temperature once the radiator in the primary bedroom is not active if there are no other primary zone is active.

It will be appreciated that if the cloak room was to be become active in the middle of the night due to a set up error in the timing of that zone, the cloak room would only warm up if one of the primary zones in the house was also on. Since the cloakroom is a secondary zone if it comes on when no primary zones are on or active, the cloakroom will not warm up as it cannot call for the boiler to fire.

Alternatively the controller can interrogate the boiler rather than the primary radiator valves and can output a signal to the radiator valve in the bathroom 1 to operate if the boiler is fired up.

The bedroom 2 may now enter an on period and the boiled is fired up to heat this bedroom. Bathroom 1 is still in an on period. The temperature has not reached the set point so the controller controls the radiator valve in bathroom 1 to operate as the boiler is active for bedroom 2.

The kitchen enters an on period and the radiator valve is opened for the kitchen radiator. The living room and study are not used in the morning so there are no active or on periods entered in the controller for these areas in the morning period. Once the occupants have left the controller enters an off or deactivated period for all rooms and all the radiator valves are turned off and the boiler is turned off. If the occupants leave earlier than expected the system can be deactivated by activation of a "leave now" button on the boiler controller or by means of an input on the input means.

The controller is set to heat water for a hot water tank in a period during the day when the building is unoccupied.

In the evening the kitchen enters an on period first. The hallway is linked to the kitchen and enters an on or active period with the kitchen. The cloak room enters an on or active period after the kitchen and is a secondary zone so is heated while the kitchen is being heated. The living room is set to enter an on or active period after the kitchen and the on or active period extends later into the evening than the on or active period for the kitchen. The hallway is a slave to the living room and so stays on or active when the kitchen is off but the living room is on or active. The hallway has a lower set temperature than the kitchen or the living room. The cloak room also has a lower set temperature than the kitchen or living room. The study is not used during the week so is not set to come on or be active during the week.

The bedrooms are set to enter an on or active period later in the evening and have a lower set temperature than in the mornings. The bathroom can be set to have a temperature higher than the bedroom. The bedrooms enter an on or active period for the night. Bedroom 1 is warm overnight and bedroom 2 is cool overnight according to the occupant's preferences.

It will be appreciated that significant fuel savings can be made if the on or active and off periods are accurately set to the needs of the occupants. The system also offers significant advantages over existing systems in dealing with hallways and less used rooms such as bathrooms and avoiding having to have these heated at all times but without having to extend specific control to each room individually.

The system will now be described in the intelligent mode. The user input is either through the interface or through a remote app or programme. The user selects which rooms are to be in intelligent mode. Each room needs to have an occupancy detector to be in intelligent mode. Other rooms can be slaves to a primary master room or can be secondary rooms.
Initially the user can input a timed schedule for periods in which each room is expected to be occupied. The user also inputs an active temperature, an away temperature and a night-time temperature for each room. The night time temperature may be the same as the away temperature or may be different depending on the room and the user's preference. In the intelligent mode a zone is active if occupancy is detected or predicted.

Once the controller is active in the intelligent mode the controller is able to operate a radiator in a room when occupation is predicted. If a room is a slave room heating in that room will be activated when heating of a respective master room is activated. It will be understood that the slave room may not have a temperature sensor. In the example bedroom 1 may have a predicted occupancy before bedroom 2 because the occupant rises earlier and is detected by the occupancy detector. The controller will learn the time taken to warm up the room and can start heating the room in time to reach the desired active temperature by the predicted occupancy time. The first bathroom is a secondary zone and the controller will heat the bathroom if occupancy is predicted and a primary zone is on or active.

As the first bedroom enters an occupied condition earlier than the other rooms it is the first room to be heated and no other rooms are drawing heat at the time so the room is heated quickly.

In general bedroom 3 is not occupied but if a guest is staying the controller will detect occupation of the room and will output signals to heat the room when occupation is detected. In addition bathroom 2 is a slave to bedroom 3 and is heated at the same time that bedroom 3 is heated.

The controller uses the input schedule and detected occupancy to predict when the kitchen will be occupied and how long it will be occupied for. The controller operates the radiator in the kitchen to bring the kitchen to the desired temperature by the time that occupation is predicted. The boiler is not supplying hot water to every radiator and so the kitchen reaches the desired temperature more quickly.

Occupancy of the study and the living room is not predicted and so these rooms do not enter an active state. The controller is arranged to ensure that the heating stops when the users leave the house. In addition the user is able to activate a "leave now" signal on the controller or on one of the remote controls to input to the controller that the house is unoccupied. This may be particularly advantageous if the occupant leaves earlier than usual.

Operation of the heating in the afternoon and evening is similar to the operation on the timed mode but is more accurately controlled by the predicated occupancy which is based on historical occupancy data over several weeks, months and years. If the pattern of occupancy changes the controller is able to take account of the change automatically without user input. In the intelligent mode the system is able to respond automatically to a user returning home unexpectedly early by controlling the heating to be on in a room in which the user is detected by the occupancy detection means. In addition the controller is able to predict from historical data if there is another room which is likely to be occupied if a user has returned early by interrogating historical occupancy data. For example historical data may indicate that the kitchen and the living room are occupied in the first 30 minutes after the user has returned and so if the controller detects the presence of a person in the kitchen early the controller can bring forward heating of the living room as well as the kitchen. The controller may also advance heating of the cloakroom if the kitchen is occupied in the first 30 mins. Since the study and the bedrooms are not normally occupied in the first 30 mins they are not advanced.

It will be appreciated that the system is able to heat rooms as they are needed rather than heating all rooms of a building. Accordingly significant fuel savings are predicted and it has been found that savings of up to 30% can be achieved depending on the previous system. Fuel savings are less if the previous systems used thermostatic radiator valves for each room.

The user can alert the system to an early return using one of the remote interfaces. An early alert will advance heating of the rooms as described earlier but the rooms will be at the desired temperature when the user returns rather than the user having to wait for the rooms to heat up.

As described the system can analyse the temperature data to establish a typical warm up time. The system can also interrogate weather data from the internet to use a forecast to modify the set temperature and the warm up time. The system can reduce the set temperature for a room if it is forecast to be a sunny day as the solar index influences an occupant to feel warmer because of the sunshine. In addition the system is able to calculate from historical temperature data that a warm up time in a south facing room is less than that in a north facing room and to factor this into a warm up period prior so that the room has reached the desired temperature just before occupation is predicted.

If it is a cold, grey day the controller can be set to boost the temperature. This can be for one room or all of the building. The rooms can be linked together as groups and the controller can be arranged to boost the temperature for a group of rooms or just one room. The temperature returns to the pre boost setting at the end of the boost.

An external temperature probe is provided outside the house and outputs temperature data to the controller. The controller is also arranged to obtain weather forecast data for the locality.

The controller is arranged to input temperature adjustments from the input means or the remote input means. The controller can also adjust the set point temperature from signals output by the radiator valve if the user adjusts the radiator valve directly.

The controller is arranged to communicate with a remote server every ten minutes. If the controller misses three sequential communications the server is arranged to output a signal to a communication means, such as email or text, as selected by the user. Occupation data and temperature data is stored in the server. Some occupation data can be stored in the controller.

The controller can also analyse temperature data and occupation data and present the information to the user in the form of a report. The report can summarise energy use and compare the use to previous weeks. The controller may record and calculate a period spent heating the building. The controller can be arranged to measure a boiler run time and a zone run time. It is envisaged that the controller can be arranged to receive information from a smart meter installed in the building or that the system can include a gas usage meter that can be installed in the gas supply. The report may also record and present information on the warm up periods, and indicate the number of hours heating in each zone. The report can also indicate the mode of each zone, the occupancy of each zone and any warnings or errors reported.

The controller is also provided with a holiday function in which all of the zones are in an off status. The holiday status can be entered either directly on the controller or remotely by means of one of the remote interfaces. In this status the controller monitors the temperature in each room and if the temperature falls below 4°C the system enters a frost protection mode and heating of the zones is initiated to prevent the rooms from cooling to less than 4°C.

The system is also arranged to output a signal such that the user receives a message that the system has entered a frost protection mode. The controller is also arranged to interrogate operation of the radiator controls and the temperature sensor as well as the boiler and is further arranged to output a signal such that the user receives a message if a malfunction is detected.

The user has an energy saving control in the intelligent mode in which he can adjust the comfort of the house against the cost of heating. In one mode the controller is arranged to only use occupancy detection so there is no use of occupancy prediction and a zone or a group of zones or the whole building can be purely reactive. In a more comfortable mode the controller uses a mix of occupancy prediction and occupancy detection so if a room is vacated for a period of time it is allowed to cool but as soon as it is re-entered it will become active again. A comfort setting uses occupancy prediction and occupancy detection and in addition maintains heating in a zone or group of zones or house if there is no detection of an occupant in a zone for a period of time; the period may be adjusted by the user depend of their preferences but typically is about 15 mins. A higher level of comfort is expected if the gap in occupancy which is bridged is 30 mins or higher but it will be appreciated that the cost of fuel is increased.

Use of the described system enables fuel savings to be made as well as providing a comfortable house for an occupant. The heating is flexible and readily controlled both in the building and remotely and provides for intelligent adjustment so that a user can have a heating system that is tailored to the requirements without having to spend long periods entering and adjusting heating schedules. In addition it can be seen from the reports if energy can be saved in some areas by changing a set point temperature or by changing from timer mode to intelligent mode or by changing the comfort mode that is used.

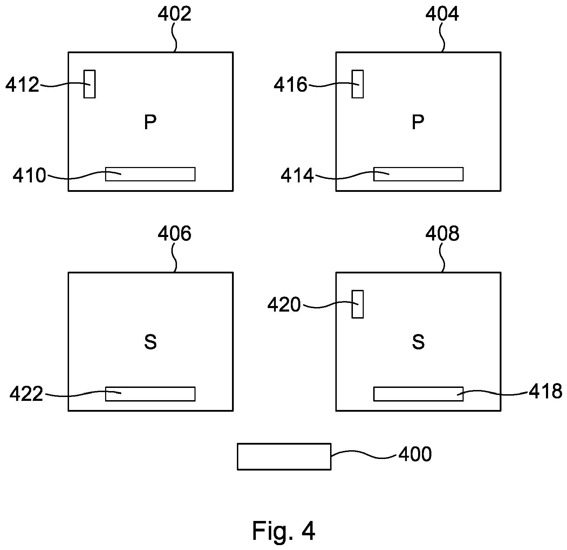

Figure 4 is a schematic representation of a system in which a controller 400 is provided which controls a temperature in rooms 402, 404, 406 and 408. Room 402 is allocated as a first primary zone and has a heating source 410 and a temperature detector 412. Room 404 is allocated to a second primary zone and has a heating source 414 and a temperature detector 416. Room 408 is allocated to a secondary zone and is provided with a heating source 418 and temperature detector 420. Room 406 is allocated to a secondary zone and is linked to the first primary zone 402. Room 406 has a heating source 422.

As room 406 is linked to a single primary zone it can be described as a slave to the first primary zone. The heating source 422 is signalled to be operative when the heating source in primary zone 402 is active and operating. The heating source in secondary zone 406 is not operative if the heating source in the linked primary zone is not operating. Room 406 does not have a temperature detector and a temperature detector is not required because the room 406 is a slave to the primary zone 402 and the operation of the heating source in the secondary zone follows that of the heating source of the primary zone.

Room 408 is also a secondary zone but is not linked to primary zone. Room 408 has a temperature detector. The controller may be set to have a schedule of heating times for room 408. When the controller enters a period in which the secondary zone 408 is active the controller polls the primary zones in 402 and 404. If at least one of the heating sources in primary zone 402 or 404 is active the controller outputs a signal to the heating source in secondary zone 408 to operate and heat the room 408. If neither the heating source in zone 402 nor the heating source in primary zone 404 is active the controller does not output a signal to the operating means of the heating source in secondary zone 408.

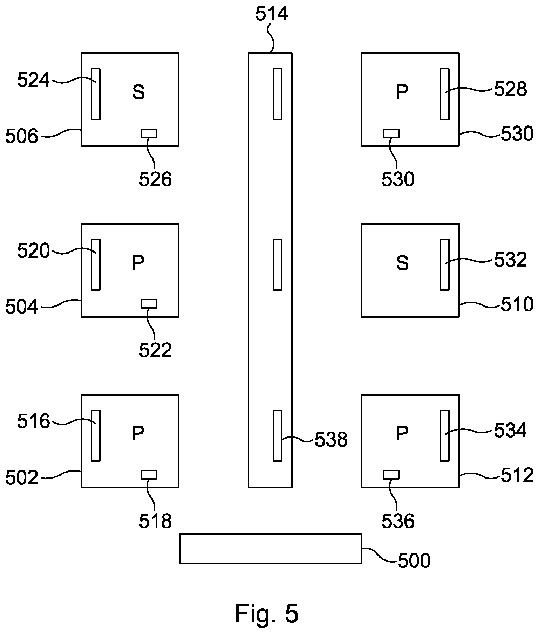

Figure 5 is a schematic representation of a system in which a controller 500 is provided which controls a temperature in rooms 502, 504, 506, 508, 510, 512, and 514. Room 502 is allocated as a first primary zone and has a heating source 516 and a temperature detector 518. Room 504 is allocated to a second primary zone and has a heating source 520 and a temperature detector 522. Room 506 is allocated to a secondary zone and is provided with a heating source 524 and temperature detector 526. Room 506 is linked to primary zones in rooms 502 and 504. Room 508 is allocated as a primary zone and has a heating source 528 and temperature detector 530. Room 510 is allocated to a secondary zone and is linked to the primary zone or room 508. Room 510 has a heating source 532. Room 512 is a primary zone and has a heating source 534 and a temperature detection means 536. Hallway 514 is a secondary zone linked to primary zones 502, 504, 508 and 512.

The controller 500 outputs signals to the operating means controlling the heat source in the primary rooms 502, 504, 508 and 512 in response to detected parameter including detected occupancy and predicted occupancy in order to maintain a detected temperature in the respective rooms at a pre-set temperature during an active period.

Room 506 is a secondary zone linked to primary zones in rooms 502 and 504. Accordingly the controller will output signals to operate the heating source in secondary zone 506 if an output from temperature detector 526 indicates that the temperature in room 506 is less than a pre-set temperature and the heating sources in one of primary zones 502 and 504 is in an active period for one of primary zones 502 and 504. If neither of the heating sources in rooms 502 and 504 is active the controller will not output a signal to operate to the heating source in room 506.

Room 510 is linked to primary zone 508. Room 510 is only linked to one primary zone and can be referred to as a slave zone, since the active periods when the room 510 is being heated to a pre-set temperature follow that of the linked primary zone. If the controller outputs a signal to operate the heating source in primary zone 508 it also outputs a signal to operate the heating source in linked secondary room 510.

Hallway 514 is a secondary zone linked to primary zones 502, 504, and 508. Hallway 514 can be referred to as a child zone relative to the parent zones 502, 504, and 508. The hallway 514 has a plurality of heating sources 538, 538', 538". The controller will poll the active periods for each of the primary zones 502, 504, and 508 and will poll whether a heating source is operating in one of primary zones. If a heating source is operating the controller will output signals to operate the or each heating source, 538, 538', 538" such that the temperature in the hallway is maintained at a pre-set temperature. If none of the heating sources in the linked primary zones 502, 504, and 508 is active the controller will not output signals to the operate the heating sources in the hallway. If primary zone 512is active and the heating source 534 is operating the controller will not output signals to operate the heating source 538, 538', 538" in the hallway since the hallway is not linked to the primary zone 512.

## Claims

1. A heating or cooling control system for a building comprising a number of controlled rooms (2, 6, 8, 10, 12; 402, 404, 406, 408; 502, 504, 506, 508, 510, 512, 514) wherein there is provided at least
a first controlled room (12; 402, 502) comprising: a first heating or cooling source (26; 410; 516); a first operating means (28) for controlling operation of the heating or cooling source (26; 410; 516); a first temperature detection means (36; 412; 518) arranged to detect a temperature in the first room and to output temperature information; and at least one second controlled room (8; 408; 506) comprising: a second heating or cooling source (418; 524), a second operating means arranged to control operation of the second heating or cooling source and a second temperature detection means (38; 420; 526) arranged to detect a temperature in the second controlled room; and
a third controlled room (6; 404; 504) comprising: a third heating or cooling source (26; 414; 520); a third operating means (28) for controlling operation of the third heating or cooling source; a third temperature detection means (36; 416; 522) arranged to detect a temperature in the third room and to output temperature information;
and wherein the system comprises a controller (32; 400; 500) arranged to receive data from the first (36; 412; 518), second (38; 420; 526) and third (36; 416; 522) temperature detection means and to output signals controlling the first second, and third operating means **characterised in that**
the controller (32; 400; 500) is arranged to be able to allocate the first room in the building to a first primary zone, to be able to allocate the second controlled room (8; 408; 506) in the building to a first secondary zone and the controller (32; 400; 500) is arranged to be able to allocate the third room (6; 404; 504) in the building to a second primary zone and wherein the controller is arranged to control a temperature in the first (12; 402; 502) and second primary rooms (6; 404; 504) in response to a respective temperature output from the first and third rooms and to control a temperature in the first secondary zone (8; 408; 506) in response to a temperature output of the second temperature detection means (38; 420; 526) when the heating or cooling source in one of the first primary (12; 402; 502) zone or the second primary zones (6; 404; 504) is active and wherein the secondary zone is a slave zone linked to one of the primary zones as a master primary zone and the secondary slave zone is arranged such that the operating means in the slave zone is controlled to be active if the operating means in the master primary zone is active.

2. A system according to claim 1 wherein the controller (32; 400; 500) is arranged to control heating or cooling in the primary zone (12; 402; 502) in response to at least one parameter which is selected from a group comprising a detected temperature in the primary zone; a set point temperature; a detected occupancy; a predicted occupancy; a schedule of times and a number of time periods.

3. A system according to claim 1 or claim 2 wherein the system comprises a plurality of secondary zones (8, 4, 20, 22; 406, 408; 506, 510, 514).

4. A system according to any preceding claim wherein the heating or cooling source comprises one or more of:
i) a radiator fluidly connected to a boiler by linking pipe-work and wherein the operating means preferably comprises a radiator valve in communication with the controller;
ii) an electrically operated radiator and wherein the operating means preferably comprises an electric switch;
iii) an MVHR system;
iv) underfloor heating
v) an infra red (IR) panel,
vi) an air source heat pump (ASHP);
vii) an ground source heat pump (GSHP);
viii) a biomass boiler
ix) an electric storage heater
x) an air conditioning unit; or
xi) an electric radiator.

5. A system according to any one of claims 1 to 4 wherein the secondary zone (8; 408; 506; 514) is linked to at least two master primary zones (12; 402; 502) and wherein the secondary zone is arranged such that the operating means in the secondary zone (8; 400; 506; 404; 504) is controlled to be active when the operating means in one of the linked master zones is active.

6. A system according to any preceding claim wherein the second temperature detection means (38; 420; 526) in the secondary zone (8; 408; 506) has a set point temperature that is different from a set point temperature of the master zone.

7. A system according to any preceding claim wherein the first controlled room has an occupancy detector arranged to detect room occupancy and to output occupancy data to the controller and wherein the occupancy detector preferably comprises one or more of a heat detector, a luminance detector, a motion sensor, an electrical load sensor, a noise sensor, a radio signal sensor, a phone signal detector; a phone GPS detector; a phone GPRS detector; a network traffic sensor sensing internet traffic; an air pressure sensor; a CO2 sensor detecting people's extended presence in a room; a data input detector detecting occupants changing settings on the device; a smart meter detecting usage of gas or electricity in the building; a flow meter detecting water usage indicating occupation of the building; a current sensor detecting energy usage or a change in energy usage; detection of infrared signals such as from a remote control; RFID detecting a tag provided for a user; a bluetooth key detection; CCTV and IR cameras providing image recognition and security surveillance; beam breaks; GPRS arranged to receiving SMS or phone instructions; a humidity detector arranged to detect humidity changes in the atmosphere as a result of occupation of a room.

8. A system according to any preceding claim wherein the controller (32; 400; 500) further comprises a storage means arranged to store occupancy information and the controller is preferably arranged to access occupancy information, preferably including input occupancy schedules and/or historical occupancy data, and to use the occupancy information to calculate predicted occupancy based on a number of days of historical or input occupancy data.

9. A system according to any preceding claim wherein the controller (32; 400; 500) is arranged to receive inputs for at least a first, second and a third set point temperature for each controlled room and wherein the or each set point temperature may be set to a temperature from 0°C to 30°C or preferably from 1°C to 29 C or more preferably from 4°C to 29 C or most preferably a temperature from 4 C to 28°C.

10. A system according to any preceding claim wherein the controller (32; 400; 500) is arranged to receive additional information such as proximity data relating to one or more users of the building (1); a weather forecast; inputs from other devices such as a fire alarm and a security system; inputs relating to a solar or a UV index indicative of expected sunshine; an external measured temperature; an input relating to a holiday period and wherein in some embodiments the controller controls operation of the heating or cooling source to take account of a heating or cooling characteristic of the room.

11. A system according to any preceding claim wherein the controller (32, 400; 500) is arranged to control at least one of:
i) a hot water supply to the building and preferably the controller is arranged such that the hot water supply is heated at a time when the zones are not being heated, and
ii) lighting in at least one of the controlled rooms and wherein preferably the lighting is controlled such that occupancy is simulated;
iii) electrical outlets which may be connected to other electrical goods;
iv) security devices such as locks, or
v) safety devices such as smoke or carbon dioxide detectors.

12. A system according to any preceding claim where a number of primary or secondary zones are linked to form a group and wherein a group of rooms can be collectively controlled.

13. A method of heating or cooling a building (1) comprising installing a system in accordance with any one of claim 1 to 12;
selecting a first controlled room (12, 402, 502) to be a primary zone;
arranging a first heating or cooling source (26; 410; 516) in the first controlled room to be controlled by a first operating means (28);
installing a first temperature detection means (36; 412; 518) arranged to detect a temperature in the first room and to output temperature data;
selecting a second controlled room to be a secondary zone (8; 408; 506); arranging a second heating or cooling source (418; 524) in the second controlled room to be controlled by a second operating means;
installing a second temperature detection means (38; 420; 526) arranged to detect a temperature in the second room and to output temperature data;
selecting a third controlled room (6; 404; 504) to be a primary zone;
arranging a third heating or cooling source (26; 414; 520) in the third controlled room to be controlled by a third operating means;
installing a third temperature detection means (36; 416; 522) arranged to detect a temperature in the third room and to output temperature data;
providing a controller (32; 400; 500) arranged to output signals controlling the first, second and third operating means to heat or cool the respective room;
**characterised in that** the controller (32; 400; 500) is arranged to allocate a first room in a building to a first primary zone and the third room to a second primary zone and to be able to allocate the second controlled room in the building to a first secondary zone and wherein
the controller (32; 400; 500) is arranged to control a temperature in the first (12; 402; 502) and second (6; 404; 504) primary rooms in response to a respective temperature output from the first and second rooms and to control temperature in the first secondary zone (8; 408; 526) in response to a temperature output of the second temperature detection means (38; 420; 526) when the heating or cooling source in one of the first primary zone or the second primary zone is active and wherein the secondary zone is a slave zone linked to one of the primary zones as a master primary zone and the secondary slave zone is arranged such that the operating means in the slave zone is controlled to be active if the operating means in the master primary zone is active.

14. A method of controlling a temperature in a building (1) in accordance with claim 13 wherein the controller (32; 400; 500) is arranged to respond to a period of non occupancy in a zone in which occupancy is predicted by:
i) signalling the control means to be inactive while occupancy is undetected;
ii) signalling the control means to be inactive if occupancy is undetected for longer than a predetermined bridging period of time and wherein the bridging period is preferably adjustable by the user.

15. A kit of parts that when assembled comprises a system in accordance with any one of claims 1 to 12 the kit comprising at least:
a controller unit arranged to be able to allocate a first room as a first primary zone, a second room as a secondary zone and a third rom as a second primary zone;
at least three control means
at least three temperature detectors.

## Patentansprüche

1. Heizungs- oder Kühlungsregelsystem für ein Gebäude, umfassend eine Reihe von geregelten Räumen (2, 6, 8, 10, 12; 402, 404, 406, 408; 502, 504, 506, 508, 510, 512, 514), wobei zumindest Folgendes vorgesehen ist:
ein erster geregelter Raum (12; 402, 502), umfassend: eine erste Heiz- oder Kühlquelle (26; 410; 516); ein erstes Betriebsmittel (28) zum Steuern des Betriebs der Heiz- oder Kühlquelle (26; 410; 516); ein erstes Temperaturdetektionsmittel (36; 412; 518), eingerichtet zum Detektieren einer Temperatur in dem ersten Raum und zum Ausgeben von Temperaturinformationen; und mindestens ein zweiter geregelter Raum (8; 408, 506), umfassend: eine zweite Heiz- oder Kühlquelle (418; 524); ein zweites Betriebsmittel, eingerichtet zum Steuern des Betriebs der zweiten Heiz- oder Kühlquelle und ein zweites Temperaturdetektionsmittel (38; 420; 526), eingerichtet zum Detektieren einer Temperatur in dem zweiten geregelten Raum; und
ein dritter geregelter Raum (6; 404, 504), umfassend:
eine dritte Heiz- oder Kühlquelle (26; 414; 520); ein drittes Betriebsmittel (28) zum Steuern des Betriebs der dritten Heiz- oder Kühlquelle; ein drittes Temperaturdetektionsmittel (36; 416; 522), eingerichtet zum Detektieren einer Temperatur in dem dritten Raum und zum Ausgeben von Temperaturinformationen;
und wobei das System einen Regler (32; 400; 500) umfasst, der eingerichtet ist zum Empfangen von Daten von dem ersten (36; 412; 518), dem zweiten (38; 420; 526) und dem dritten (36; 416; 522) Temperaturdetektionsmittel und zum Ausgeben von Signalen, die das erste, das zweite und das dritte Betriebsmittel steuern, **dadurch gekennzeichnet, dass** der Regler (32; 400; 500) dafür eingerichtet ist, in der Lage zu sein zum Zuweisen des ersten Raums in dem Gebäude zu einer ersten Primärzone, in der Lage zu sein zum Zuweisen des zweiten geregelten Raums (8; 408; 506) in dem Gebäude zu einer ersten Sekundärzone und der Regler (32; 400; 500) dafür eingerichtet ist, in der Lage zu sein zum Zuweisen des dritten Raums (6; 404; 504) in dem Gebäude zu einer zweiten Primärzone, und wobei der Regler eingerichtet ist zum Regeln einer Temperatur in dem ersten (12; 402; 502) und dem zweiten (6; 404; 504) Primärraum, als Reaktion auf eine jeweilige Temperaturausgabe von dem ersten und dem dritten Raum und zum Regeln einer Temperatur in der ersten Sekundärzone (8; 408; 506) als Reaktion auf eine Temperaturausgabe des zweiten Temperaturdetektionsmittels (38; 420; 526), wenn die Heiz- oder Kühlquelle in der ersten Primärzone (12; 402; 502) oder der zweiten Primärzone (6; 404; 504) aktiv ist und wobei die Sekundärzone eine Sklavenzone ist, die mit einer der Primärzonen als eine Master-Primärzone verbunden ist, und die Sekundärsklavenzone derart eingerichtet ist, dass das Betriebsmittel in der Sklavenzone gesteuert wird, aktiv zu sein, wenn das Betriebsmittel in der Master-Primärzone aktiv ist.

2. System nach Anspruch 1, wobei der Regler (32; 400; 500) eingerichtet ist zum Regeln von Heizung oder Kühlung in der Primärzone (12; 402; 502) als Reaktion auf mindestens einen Parameter, welcher aus einer Gruppe ausgewählt ist, die eine detektierte Temperatur in der Primärzone; eine Temperatureinstellung; eine detektierte Belegung; eine vorhergesagte Belegung; einen Zeitplan und eine Reihe von Zeiträumen umfasst.

3. System nach Anspruch 1 oder Anspruch 2, wobei das System mehrere Sekundärzonen (8, 4, 20, 22; 406, 408; 506, 510, 514) umfasst.

4. System nach einem der vorhergehenden Ansprüche, wobei die Heiz- oder Kühlquelle eines oder mehrere der Folgenden umfasst:
(i) einen Heizkörper, der flüssigkeitstechnisch durch eine verbindende Verrohrung mit einem Boiler verbunden ist, und wobei das Betriebsmittel bevorzugt ein Heizkörperventil umfasst, das mit dem Regler in Kommunikation steht;
(ii) einen elektrisch betriebenen Heizkörper und wobei das Betriebsmittel bevorzugt einen elektrischen Schalter umfasst;
(iii) ein Umluft-Wärmerückgewinnung-System bzw. MVHR-System;
(iv) eine Fußbodenheizung;
(v) ein Infrarotpaneel bzw. IR-Paneel;
(vi) eine Luft-Wärmepumpe bzw. ASHP;
(vii) eine Boden-Wärmepumpe bzw. GSHP;
(viii) einen Biomasseboiler;
(ix) ein Elektrospeicherheizgerät;
(x) eine Klimaanlageneinheit; oder
(xi) einen elektrischen Heizkörper.

5. System nach einem der Ansprüche 1 bis 4, wobei die Sekundärzone (8; 408; 506; 514) mit mindestens zwei Master-Primärzonen (12; 402; 502) verbunden ist und wobei die Sekundärzone derart eingerichtet ist, dass das Betriebsmittel in der Sekundärzone (8; 400; 506; 404; 504) gesteuert wird, aktiv zu sein, wenn das Betriebsmittel in einer der verbundenen Masterzonen aktiv ist.

6. System nach einem der vorhergehenden Ansprüche, wobei das zweite Temperaturdetektionsmittel (38; 420; 526) in der Sekundärzone (8; 408; 506) eine Einstelltemperatur aufweist, die sich von einer Einstelltemperatur der Masterzone unterscheidet.

7. System nach einem der vorhergehenden Ansprüche, wobei der erste geregelte Raum einen Belegungsdetektor umfasst, der eingerichtet ist zum Detektieren von Raumbelegung und zum Ausgeben von Belegungsdaten an den Regler und wobei der Belegungsdetektor bevorzugt eines oder mehrere der Folgenden umfasst: einen Wärmedetektor, einen Luminanzdetektor, einen Bewegungssensor, einen Elektrische-Last-Sensor, einen Geräuschsensor, einen Funksignalsensor, einen Telefonsignalsensor; einen Telefon-GPS-Detektor; einen Telefon-GPRS-Detektor; einen Netzwerkverkehrssensor, der Internet-Verkehr erfasst; einen Luftdrucksensor; einen CO₂-Sensor, der längeren Aufenthalt von Personen in einem Raum detektiert; einen Dateneingabedetektor, der detektiert, dass Beleger Einstellungen an der Vorrichtung vornehmen; ein Smart-Meter, das Nutzung von Gas oder Elektrizität in dem Gebäude detektiert; einen Durchflussmesser, der Wassernutzung detektiert, was eine Belegung des Gebäudes anzeigt; einen Stromsensor, der Energienutzung oder eine Änderung der Energienutzung detektiert; Detektion von Infrarotsignalen, wie etwa von einer Fernbedienung; RFID, das einen für einen Benutzer bereitgestellten Tag detektiert; eine Bluetooth-Schlüssel-Detektion; Videoüberwachungs- und IR-Kameras, die Bilderkennung und Sicherheitsüberwachung bereitstellen; Strahlunterbrechungen; GPRS, eingerichtet zum Empfangen von SMS oder Telefonanweisungen; einen Feuchtigkeitssensor, eingerichtet zum Detektieren von Feuchtigkeitsänderungen in der Atmosphäre als ein Ergebnis von Belegung eines Raums.

8. System nach einem der vorhergehenden Ansprüche, wobei der Regler (32; 400; 500) ferner ein Speichermittel umfasst, das eingerichtet ist zum Speichern von Belegungsinformationen, und wobei der Regler bevorzugt eingerichtet ist zum Zugreifen auf Belegungsinformationen, die bevorzugt eingegebene Belegungszeitpläne und/oder historische Belegungsdaten umfassen, und zum Verwenden der Belegungsinformationen zum Berechnen einer vorhergesagten Belegung auf der Grundlage von einer Reihe von Tagen von historischen oder eingegebenen Belegungsdaten.

9. System nach einem der vorhergehenden Ansprüche, wobei der Regler (32; 400; 500) eingerichtet ist zum Empfangen von Eingaben für mindestens eine erste, eine zweite und eine dritte Einstelltemperatur für jeden geregelten Raum und wobei die oder jede Einstelltemperatur auf eine Temperatur von 0°C bis 30°C oder bevorzugt von 1°C bis 29°C oder besonders bevorzugt von 4°C bis 29°C oder ganz besonders bevorzugt auf eine Temperatur von 4°C bis 28°C eingestellt sein kann.

10. System nach einem der vorhergehenden Ansprüche, wobei der Regler (32; 400; 500) eingerichtet ist zum Empfangen zusätzlicher Informationen, wie etwa Näherungsdaten, die sich auf einen oder mehrere Benutzer des Gebäudes (1) beziehen; eine Wettervorhersage; Eingaben von anderen Vorrichtungen, wie etwa einem Brandalarm und einem Sicherheitssystem; Eingaben, betreffend einen Solar- oder einen UV-Index, der erwarteten Sonnenschein angibt; eine gemessene Außentemperatur; eine Eingabe, betreffend einen Ferienzeitraum und wobei der Regler in manchen Ausführungsformen den Betrieb der Heiz- oder Kühlquelle steuert, um eine Heiz- oder Kühlcharakteristik des Raums zu berücksichtigen.

11. System nach einem der vorhergehenden Ansprüche, wobei der Regler (32; 400; 500) eingerichtet ist zum Steuern von mindestens einem der Folgenden:
(i) eine Warmwasserversorgung zu dem Gebäude und wobei der Regler bevorzugt derart eingerichtet ist, dass die Warmwasserversorgung zu einer Zeit geheizt wird, wenn die Zonen nicht geheizt werden, und
(ii) Beleuchtung in mindestens einem der geregelten Räume und wobei die Beleuchtung bevorzugt derart gesteuert wird, dass Belegung simuliert wird;
(iii) Stromanschlüsse, die mit anderen Elektrogeräten verbunden sind;
(iv) Sicherheitsvorrichtungen, wie etwa Schlösser, oder
(v) Sicherheitsvorrichtungen, wie etwa Rauch- oder Kohlendioxiddetektoren.

12. System nach einem der vorhergehenden Ansprüche, wobei eine Reihe von Primär- oder Sekundärzonen verkettet ist, um eine Gruppe auszubilden, und wobei eine Gruppe von Räumen kollektiv geregelt werden kann.

13. Verfahren zum Heizen oder Kühlen eines Gebäudes (1), umfassend Installieren eines Systems nach einem der Ansprüche 1 bis 12;
Auswählen eines ersten geregelten Raums (12, 402, 502) als eine Primärzone;
Anordnen einer ersten Heiz- oder Kühlquelle (26; 410; 516) in dem ersten geregelten Raum, die durch ein erstes Betriebsmittel (28) gesteuert werden soll; Installieren eines ersten Temperaturdetektionsmittels (36; 412; 518), eingerichtet zum Detektieren einer Temperatur in dem ersten Raum und zum Ausgeben von Temperaturdaten;
Auswählen eines zweiten geregelten Raums als eine Sekundärzone (8; 408; 506);
Anordnen einer zweiten Heiz- oder Kühlquelle (418; 524) in dem zweiten geregelten Raum, die durch ein zweites Betriebsmittel gesteuert werden soll;
Installieren eines zweiten Temperaturdetektionsmittels (38; 420; 526), eingerichtet zum Detektieren einer Temperatur in dem zweiten Raum und zum Ausgeben von Temperaturdaten;
Auswählen eines dritten geregelten Raums (6; 404; 504) als eine Primärzone;
Anordnen einer dritten Heiz- oder Kühlquelle (26; 414; 520) in dem dritten geregelten Raum, die durch ein drittes Betriebsmittel gesteuert werden soll; Installieren eines dritten Temperaturdetektionsmittels (36; 416; 522), eingerichtet zum Detektieren einer Temperatur in dem dritten Raum und zum Ausgeben von Temperaturdaten;
Bereitstellen eines Reglers (32; 400; 500), eingerichtet zum Ausgeben von Signalen, die das erste, das zweite und das dritte Betriebsmittel steuern, den jeweiligen Raum zu heizen oder zu kühlen;
**dadurch gekennzeichnet, dass** der Regler (32; 400; 500) eingerichtet ist zum Zuweisen eines ersten Raums in einem Gebäude zu einer ersten Primärzone und des dritten Raums zu einer zweiten Primärzone und in der Lage zu sein zum Zuweisen des zweiten regelten Raums in dem Gebäude zu einer ersten Sekundärzone und wobei
der Regler (32; 400; 500) eingerichtet ist zum Regeln einer Temperatur in dem ersten (12; 402; 502) und dem zweiten (6; 404; 504) Primärraum, als Reaktion auf eine jeweilige Temperaturausgabe von dem ersten und dem dritten Raum und zum Regeln einer Temperatur in der ersten Sekundärzone (8; 408; 526) als Reaktion auf eine Temperaturausgabe des zweiten Temperaturdetektionsmittels (38; 420; 526), wenn die Heiz- oder Kühlquelle in der ersten Primärzone oder der zweiten Primärzone aktiv ist und wobei die Sekundärzone eine Sklavenzone ist, die mit einer der Primärzonen als eine Master-Primärzone verbunden ist, und die Sekundärsklavenzone derart eingerichtet ist, dass das Betriebsmittel in der Sklavenzone gesteuert wird, aktiv zu sein, wenn das Betriebsmittel in der Master-Primärzone aktiv ist.

14. Verfahren zum Regeln einer Temperatur in einem Gebäude (1) nach Anspruch 13, wobei der Regler (32; 400; 500) eingerichtet ist zum Reagieren auf einen Zeitraum von Nichtbelegung in einer Zone, in welcher eine Belegung vorhergesagt wird durch:
(i) Signalisieren, dass das Steuermittel inaktiv sein soll, während Belegung undetektiert ist;
(ii) Signalisieren, dass das Steuermittel inaktiv sein soll, falls Belegung für länger als einen vorbestimmten Brückenzeitraum undetektiert ist und wobei der Brückenzeitraum bevorzugt durch den Benutzer anpassbar ist.

15. Bauteilesatz, der, wenn er zusammengebaut ist, ein System nach einem der Ansprüche 1 bis 12 umfasst, zumindest Folgendes umfassend:
eine Reglereinheit, die dafür eingerichtet ist, in der Lage zu sein zum Zuweisen eines ersten Raums als eine erste Primärzone, eines zweiten Raums als eine Sekundärzone und eines dritten Raums zu einer zweiten Primärzone;
mindestens drei Steuermittel;
mindestens drei Temperaturdetektoren.

## Revendications

1. Système de commande de chauffage ou de refroidissement pour un bâtiment comprenant un certain nombre de pièces régulées (2, 6, 8, 10, 12 ; 402, 404, 406, 408 ; 502, 504, 506, 508, 510, 512, 514) dans lequel sont disposées au moins
une première pièce régulée (12 ; 402, 502) comprenant :
une première source de chauffage ou de refroidissement (26 ; 410 ; 516) ; un premier moyen de fonctionnement (28) pour commander le fonctionnement de la source de chauffage ou de refroidissement (26 ; 410 ; 516) ; un premier moyen de détection de température (36 ; 412 ; 518) conçu pour détecter une température dans la première pièce et pour transmettre des informations de température de sortie ; et au moins une deuxième pièce régulée (8 ; 408 ; 506) comprenant : une deuxième source de chauffage ou de refroidissement (418 ; 524) ; un deuxième moyen de fonctionnement conçu pour commander le fonctionnement de la deuxième source de chauffage ou de refroidissement et un deuxième moyen de détection de température (38 ; 420 ; 526) conçu pour détecter une température dans la deuxième pièce régulée ; et
une troisième pièce régulée (6 ; 404 ; 504) comprenant :
une troisième source de chauffage ou de refroidissement (26 ; 414 ; 520) ; un troisième moyen de fonctionnement (28) pour commander le fonctionnement de la troisième source de chauffage ou de refroidissement ; un troisième moyen de détection de température (36 ; 416 ; 522) conçu pour détecter une température dans la troisième pièce et pour transmettre des informations de température de sortie ;
et dans lequel le système comprend un dispositif de commande (32 ; 400 ; 500) conçu pour recevoir des données en provenance des premier (36 ; 412 ; 518), deuxième (38 ; 420 ; 526) et troisième (36 ; 416 ; 522) moyens de détection de température et pour émettre des signaux commandant les premier, deuxième et troisième moyens de fonctionnement, **caractérisé en ce que**
le dispositif de commande (32 ; 400 ; 500) est conçu pour pouvoir attribuer la première pièce dans le bâtiment à une première zone primaire, pour pouvoir attribuer la deuxième pièce régulée (8 ; 408 ; 506) dans le bâtiment à une première zone secondaire et le dispositif de commande (32 ; 400 ; 500) est conçu pour pouvoir attribuer la troisième pièce (6 ; 404 ; 504) dans le bâtiment à une seconde zone primaire et dans lequel le dispositif de commande est conçu pour réguler une température dans les première (12 ; 402 ; 502) et deuxième pièces primaires (6 ; 404 ; 504) à la suite d'une sortie de température respective des première et troisième pièces et pour réguler une température dans la première zone secondaire (8 ; 408 ; 506) à la suite d'une sortie de température du deuxième moyen de détection de température (38 ; 420 ; 526) lorsque la source de chauffage ou de refroidissement dans l'une de la première zone primaire (12 ; 402 ; 502) et de la seconde zone primaire (6 ; 404 ; 504) est active et dans lequel la zone secondaire est une zone esclave reliée à l'une des zones primaires en tant que zone primaire maîtresse et la zone esclave secondaire est conçue de telle sorte que le moyen de fonctionnement dans la zone esclave soit commandé pour être actif si le moyen de fonctionnement dans la zone primaire maîtresse est actif.

2. Système selon la revendication 1, dans lequel le dispositif de commande (32 ; 400 ; 500) est conçu pour réguler le chauffage ou le refroidissement dans la zone primaire (12 ; 402 ; 502) en réponse à au moins un paramètre qui est sélectionné dans le groupe comprenant une température détectée dans la zone primaire ; une température de point de consigne ; une occupation détectée ; une occupation prédite ; un calendrier des moments et un nombre de périodes de temps.

3. Système selon la revendication 1 ou la revendication 2, dans lequel le système comprend une pluralité de zones secondaires (8, 4, 20, 22 ; 406, 408 ; 506, 510, 514).

4. Système selon l'une quelconque des revendications précédentes, dans lequel la source de chauffage ou de refroidissement comprend :
i) un radiateur raccordé de manière fluidique à une chaudière en reliant des canalisations et dans lequel le moyen de fonctionnement comprend, de préférence, un robinet de radiateur en communication avec le dispositif de commande ; et/ou
ii) un radiateur alimenté électriquement et dans lequel le moyen de fonctionnement comprend, de préférence, un commutateur électrique ; et/ou
iii) un système MVHR ; et/ou
iv) un chauffage par le sol ; et/ou
v) un panneau infrarouge (IR) ; et/ou
vi) une pompe à chaleur à source d'air (ASHP) ; et/ou
vii) une pompe à chaleur géothermique (GSHP) ; et/ou
viii) une chaudière à biomasse ; et/ou
ix) un dispositif de chauffage électrique à accumulation ; et/ou
x) une unité de conditionnement d'air ; et/ou
xi) un radiateur électrique.

5. Système selon l'une quelconque des revendications 1 à 4, dans lequel la zone secondaire (8 ; 408 ; 506 ; 514) est reliée à au moins deux zones primaires maîtresses (12 ; 402 ; 502) et dans lequel la zone secondaire est conçue de telle sorte que le moyen de fonctionnement dans la zone secondaire (8 ; 400 ; 506 ; 404 ; 504) soit commandé pour être actif lorsque le moyen de fonctionnement dans l'une des zones maîtresses reliées est actif.

6. Système selon l'une quelconque des revendications précédentes, dans lequel le second moyen de détection de température (38 ; 420 ; 526) dans la zone secondaire (8 ; 408 ; 506) présente une température de point de consigne qui est différente d'une température de point de consigne de la zone maîtresse.

7. Système selon l'une quelconque des revendications précédentes, dans lequel la première pièce régulée comporte un détecteur d'occupation conçu pour détecter une occupation de pièce et pour transmettre des données d'occupation au dispositif de commande et dans lequel le détecteur d'occupation comprend, de préférence, un détecteur de chaleur et/ou un détecteur de luminance et/ou un capteur de mouvement et/ou un capteur de charge électrique et/ou un capteur de bruit et/ou un capteur de signal radio et/ou un détecteur de signal de téléphone ; et/ou un détecteur de système GPS de téléphone ; et/ou un détecteur de système GPRS de téléphone ; et/ou un capteur de trafic réseau détectant un trafic Internet ; et/ou un capteur de pression d'air ; et/ou un capteur de CO2 détectant une présence prolongée de gens dans une pièce ; et/ou un détecteur d'entrée de données détectant des occupants changeant des réglages sur le dispositif ; un compteur intelligent détectant l'utilisation d'un gaz ou de l'électricité dans le bâtiment ; et/ou un débitmètre détectant une utilisation d'eau indiquant une occupation du bâtiment ; et/ou un capteur de courant détectant une utilisation d'énergie ou un changement d'utilisation d'énergie ; et/ou une détection de signaux infrarouge tels que ceux provenant d'une télécommande ; et/ou une identification RFID détectant une étiquette fournie à un utilisateur ; et/ou une détection de clé Bluetooth ; et/ou des caméras de télévision CCTV et IR assurant une reconnaissance d'image et une surveillance de sécurité ; et/ou des ruptures de faisceau ; et/ou un système GPRS conçu pour recevoir des instructions par SMS ou par téléphone ; et/ou un détecteur d'humidité conçu pour détecter des changements d'humidité dans l'atmosphère à la suite de l'occupation d'une pièce.

8. Système selon l'une quelconque des revendications précédentes, dans lequel le dispositif de commande (32 ; 400 ; 500) comprend en outre un moyen de stockage conçu pour stocker des informations d'occupation et le dispositif de commande est, de préférence, conçu pour accéder à des informations d'occupation, comprenant, de préférence, des calendriers d'occupation d'entrée et/ou des données d'occupation historiques et pour utiliser les informations d'occupation pour calculer une occupation prédite en se basant sur le nombre de jours de données d'occupation historiques ou d'entrée.

9. Système selon l'une quelconque des revendications précédentes, dans lequel le dispositif de commande (32 ; 400 ; 500) est conçu pour recevoir des entrées pour au moins une première, une deuxième et une troisième température de point de consigne pour chaque pièce régulée et dans lequel la température de point de consigne, ou chaque température de point de consigne, peut être réglée à une température comprise entre 0 °C et 30 °C, de préférence entre 1 °C et 29 °C pu plus préférablement entre 4 °C et 29 °C ou le plus préférablement à une température comprise entre 4 °C et 28 °C.

10. Système selon l'une quelconque des revendications précédentes, dans lequel le dispositif de commande (32 ; 400 ; 500) est conçu pour recevoir des informations supplémentaires, telles que des données de proximité se rapportant à un ou plusieurs utilisateurs du bâtiment (1) ; une prévision météorologique ; des entrées en provenance d'autres dispositifs tels qu'une alarme incendie et un système de sécurité ; des entrées se rapportant à un indice d'activité solaire ou un indice UV indiquant un ensoleillement attendu ; une température extérieure mesurée ; une entrée se rapportant à une période de vacances et dans lequel, dans certains modes de réalisation, le dispositif de commande commande le fonctionnement d'une source de chauffage ou de refroidissement pour prendre en compte une caractéristique de chauffage ou de refroidissement de la pièce.

11. Système selon l'une quelconque des revendications précédentes, dans lequel le dispositif de commande (32 ; 400 ; 500) est conçu pour commander :
i) une alimentation en eau chaude pour le bâtiment et, de préférence, le dispositif de commande est conçu de telle sorte que l'alimentation en eau chaude soit chauffée à un moment où les zones ne sont pas chauffées, et/ou
ii) un éclairage dans au moins l'une des pièces régulées et dans lequel, de préférence, l'éclairage est commandé de telle sorte qu'une occupation soit simulée ; et/ou
iii) des prises électriques qui peuvent être raccordées à d'autres appareils électroménagers ; et/ou
iv) des dispositifs de sécurité tels que des serrures, et/ou
v) des dispositifs de sécurité tels que des détecteurs de fumée ou de dioxyde de carbone.

12. Système selon l'une quelconque des revendications précédentes, dans lequel un certain nombre de zones primaires ou secondaires sont reliées pour former un groupe et dans lequel un groupe de pièces peut être commandé de manière collective.

13. Procédé de chauffage ou de refroidissement d'un bâtiment (1) consistant à installer un système selon l'une quelconque des revendications 1 à 12 ;
à sélectionner une première pièce régulée (12, 402, 502) pour être une zone primaire ;
à agencer une première source de chauffage ou de refroidissement (26 ; 410 ; 516) dans la première pièce régulée qui doit être régulée par un premier moyen de fonctionnement (28) ;
à installer un premier moyen de détection de température (36 ; 412 ; 518) conçu pour détecter une température dans la première pièce et pour transmettre des données de température de sortie ;
à sélectionner une deuxième pièce régulée pour être une zone secondaire (8 ; 408 ; 506) ; à installer une deuxième source de chauffage ou de refroidissement (418 ; 524) dans la deuxième pièce régulée qui doit être régulée par un deuxième moyen de fonctionnement ;
à installer un deuxième moyen de détection de température (38 ; 420 ; 526) conçu pour détecter une température dans la deuxième pièce et pour transmettre des données de température de sortie ;
à sélectionner une troisième pièce régulée (6 ; 404 ; 504) pour être une zone primaire ;
à agencer une troisième source de chauffage ou de refroidissement (26 ; 414 ; 520) dans la troisième pièce régulée qui doit être régulée par un troisième moyen de fonctionnement ;
à installer un troisième moyen de détection de température (36 ; 416 ; 522) conçu pour détecter une température dans la troisième pièce et pour transmettre des données de température ;
à fournir un dispositif de commande (32 ; 400 ; 500) conçu pour émettre des signaux commandant les premier, deuxième et troisième moyens de fonctionnement pour chauffer ou refroidir la pièce respective ;
**caractérisé en ce que** le dispositif de commande (32 ; 400 ; 500) est conçu pour attribuer une première pièce dans un bâtiment à une première zone primaire, et la troisième pièce à une seconde zone primaire et pour pouvoir attribuer la deuxième pièce régulée dans le bâtiment à une première zone secondaire et dans lequel
le dispositif de commande (32 ; 400 ; 500) est conçu pour réguler une température dans les première (12 ; 402 ; 502) et deuxième (6 ; 404 ; 504) pièces primaires à la suite d'une sortie de température respective des première et deuxième pièces et pour réguler une température dans la première zone secondaire (8 ; 408 ; 506) à la suite d'une sortie de température du deuxième moyen de détection de température (38 ; 420 ; 526) lorsque la source de chauffage ou de refroidissement dans l'une de la première zone primaire et de la seconde zone primaire est active et dans lequel la zone secondaire est une zone esclave reliée à l'une des zones primaires en tant que zone primaire maîtresse et la zone esclave secondaire est conçue de telle sorte que le moyen de fonctionnement dans la zone esclave soit commandé pour être actif si le moyen de fonctionnement dans la zone primaire maîtresse est actif.

14. Procédé de régulation d'une température dans un bâtiment (1) selon la revendication 13, dans lequel le dispositif de commande (32 ; 400 ; 500) est conçu pour répondre à une période de non occupation dans une zone dans laquelle une occupation est prédite :
i) en signalant que le moyen de commande est inactif pendant qu'une occupation n'est pas détectée ;
ii) en signalant que le moyen de commande est inactif si une occupation n'est pas détectée pendant une période de temps plus longue qu'une période de temps de transition prédéterminée et dans lequel la période de transition peut, de préférence, être ajustée par l'utilisateur.

15. Kit de pièces qui, lorsqu'il est assemblé, comprend un système selon l'une quelconque des revendications 1 à 12, le kit comprenant au moins :
une unité de dispositif de commande conçue pour pouvoir attribuer une première pièce en tant que première zone primaire, une deuxième pièce en tant que zone secondaire et une troisième pièce en tant que seconde zone primaire ;
au moins trois moyens de commande,
au moins trois détecteurs de température.
